(19) Europäisches Patentamt
European Patent Office
Office européen des brevets

(11) **EP 2 684 914 B1**

(12) **EUROPEAN PATENT SPECIFICATION**

(45) Date of publication and mention of the grant of the patent:
**14.12.2016 Bulletin 2016/50**

(21) Application number: **12754973.1**

(22) Date of filing: **05.03.2012**

(51) Int Cl.:
***C08L 23/00*** *(2006.01)* ***C08F 297/08*** *(2006.01)*
***C08L 53/00*** *(2006.01)* ***C08L 23/12*** *(2006.01)*
***C08L 23/04*** *(2006.01)* ***C08L 23/08*** *(2006.01)*

(86) International application number:
**PCT/JP2012/055580**

(87) International publication number:
**WO 2012/121215 (13.09.2012 Gazette 2012/37)**

(54) **RESIN COMPOSITION**

HARZZUSAMMENSETZUNG

COMPOSITION DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2011 JP 2011048397**
**05.03.2011 JP 2011048400**

(43) Date of publication of application:
**15.01.2014 Bulletin 2014/03**

(73) Proprietor: **Bridgestone Corporation**
**Tokyo 104-8340 (JP)**

(72) Inventors:
- **YAKO, Takayuki**
**Kodaira-shi**
**Tokyo 187-8531 (JP)**
- **FUKUSHIMA, Atsushi**
**Kodaira-shi**
**Tokyo 187-8531 (JP)**

(74) Representative: **Oxley, Robin John George et al**
**Marks & Clerk LLP**
**90 Long Acre**
**London WC2E 9RA (GB)**

(56) References cited:
**JP-A- 2 272 007** **JP-A- 9 255 742**
**JP-A- 2000 086 857** **JP-A- 2002 226 533**
**JP-A- 2005 126 654** **JP-A- 2007 056 145**
**JP-A- 2008 280 384**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 684 914 B1

## Description

Technical Field

The present invention relates to a resin composition having favorable impact resistance and low temperature properties.

Background Art

Olefin-based resins, for example, polypropylene resins, are excellent in terms of transparency, ductility, and rigidity. In addition, the polypropylene resins are favorable in terms of water resistance, chemical resistance, hydrolysis resistance, hinge properties, and surface hardness, and also gloss, heat resistance, insulating properties, and fluidity. Accordingly, the polypropylene resins are a general-purpose resin which is widely used for applications such as films, electrical parts, household commodities, miscellaneous goods, etc. But, impact resistance and durability at low temperatures (low temperature properties) of the olefin-based resins were not always sufficient particularly in the case of being used for automobile parts or building materials.

In order to solve the foregoing problem, for example, it was investigated in the past to subject a styrene-based resin and a polyolefin-based resin to polymer alloying (see, for example, PTL 1). But, since the styrene-based resin and the polyolefin-based resin are incompatible with each other, in mixing the styrene-based resin and the polyolefin-based resin with each other, layered separation possibly occurred, so that physical properties were rather deteriorated. In addition, composite materials of the styrene-based resin and the polyolefin-based resin cannot be welded to other resin because of poor interfacial strength. In addition, in the case of mixing the styrene-based resin and the polyolefin-based resin and molding the mixture, there was involved such a problem that because of a large difference in shrinkage factor between the styrene-based resin and the polyolefin-based resin, an internal stress is generated to cause a reduction of impact resistance.

On the other hand, as a method for improving the impact resistance of a generally brittle thermoplastic resin, it is known to alloy the thermoplastic resin with an incompatible rubber component. This method is also effective for olefin-based resins. As such technologies, for example, it is proposed to improve the impact resistance of an amorphous polyolefin by compounding it with a core/shell elastomer (see, for example, PTLs 2 to 4).

However, in such alloyed olefin-based resins, not only sufficient impact resistance was not obtainable, but it could not be said that the manufacturing steps are simple and easy.

Now, the olefin-based resins are a general-purpose resin which is used for films, electrical parts, automobile parts, building materials, and the like. But, since the olefin-based resins are not sufficient in terms of impact resistance, there have been made a variety of attempts to improve the impact resistance. For example, in order to improve this impact resistance, it is attempted to compound the olefin-based resin with a diene-based rubber (see, for example, PTLs 5 to 7).

In addition, as a method for improving the impact resistance of a generally brittle thermoplastic resin, it is known to alloy the thermoplastic resin with an incompatible rubber component. This method is also effective for olefin-based resins. As such technologies, for example, it is proposed to improve the impact resistance of an amorphous polyolefin by compounding it with a core/shell elastomer (see, for example, PTLs 8 to 11).

However, in such compositions, there is involved such a problem that not only sufficient impact resistance was not obtainable, but it could not be said that the manufacturing method is a simple and easy method.

Furthermore, durability at low temperatures is also required for automobile parts, building materials, and the like. However, any resin compositions having sufficient properties against such a requirement have not been obtained yet.

EP0387947 discloses a thermoplastic elastomeric block copolymer. US2004/0077815 discloses a block copolymer comprising a crystallizable isotactic polypropylene block and an amorphous elastomeric block.

Citation List

Patent Literature

PTL 1: JP-A-5-295193
PTL 2: JP-A-7-233301
PTL 3: JP-A-7-233302
PTL 4: JP-A-7-300540
PTL 5: JP-A-06-157836

PTL 6: JP-A-08-120129
PTL 7: JP-A-2003-020369
PTL 8: JP-A-7-233301
PTL 9: JP-A-7-233302
PTL 10: JP-A-7-300540
PTL 11: WO-A-2001/81461

## Summary of Invention

### Technical Problem

Under such circumstances, an object of the present invention is to provide a resin composition capable of enhancing impact resistance and low temperature properties (impact resistance at low temperatures).

### Solution to Problem

The present inventors have found that the technical problem of the present invention can be solved by compounding an olefin-based resin with a specified copolymer, leading to accomplishment of the present invention.

Specifically, the present invention is concerned with a resin composition containing an olefin-based resin and a copolymer of a conjugated diene compound and a non-conjugated olefin, the copolymer being a block copolymer, wherein in the copolymer, the proportion of the conjugated diene is from 30 % by mole to 80 % by mole, and wherein the content of the copolymer is from 5 to 80 parts by mass based on 100 parts by mass of the olefin-based resin.

Furthermore, a structure of the block copolymer is any one of $(A\text{-}B)_x$, $A\text{-}(B\text{-}A)_x$, and $B\text{-}(A\text{-}B)_x$ (wherein A is a block segment composed of a monomer unit of a conjugated diene compound; B is a block segment composed of a monomer unit of a non-conjugated olefin; and x is an integer of 1 or more).

### Advantageous Effects of Invention

According to the present invention, a resin composition having enhanced impact resistance and low temperature properties (impact resistance at low temperatures) can be provided.

## Brief Description of Drawings

FIG. 1 is a $^{13}$C-NMR spectral chart of Copolymer B.
FIG. 2 is a DSC curve of Copolymer B.
FIG. 3 is a DSC curve of Copolymer A.

## Description of Embodiments

The resin composition according to the present invention is a resin composition containing an olefin-based resin and a copolymer of a conjugated diene compound and a non-conjugated olefin, the copolymer being a block copolymer, wherein in the copolymer, the proportion of the conjugated diene is from 30 % by mole to 80 % by mole, and wherein the content of the copolymer is from 5 to 80 parts by mass based on 100 parts by mass of the olefin-based resin.

In addition, a structure of the block copolymer is any one of $(A\text{-}B)_x$, $A\text{-}(B\text{-}A)_x$, and $B\text{-}(A\text{-}B)_x$ (wherein A is a block segment composed of a monomer unit of a conjugated diene compound; B is a block segment composed of a monomer unit of a non-conjugated olefin; and x is an integer of 1 or more).

### [Embodiment 1]

The present invention is hereunder described in detail.

The resin composition according to the present invention is a resin composition containing an olefin-based resin and a copolymer of a conjugated diene compound and a non-conjugated olefin. In addition, the cis-1,4-bond content of the conjugated diene compound segment of the copolymer of a conjugated diene compound and a non-conjugated olefin is 50 % or more.

By incorporating the copolymer of a conjugated diene compound and a non-conjugated olefin, the impact resistance of the resin composition is enhanced, and by regulating the cis-1,4-bond content of the conjugated diene

compound segment of the copolymer of a conjugated diene compound and a non-conjugated olefin to 50 % or more, the brittleness at low temperatures is improved, so that the impact resistance at low temperatures of the resin composition can be enhanced.

The content of the copolymer of a conjugated diene compound and a non-conjugated olefin is from 5 to 80 parts by mass based on 100 parts by mass of the olefin-based resin.

<Olefin-based resin>

Next, the olefin-based resin which is contained in the resin composition according to the present invention is described. Examples of the olefin-based resin include homopolymers or copolymers of an α-olefin having the carbon number of from 2 to 20. Specifically, examples of the α-olefin having the carbon number of from 2 to 20 include ethylene, propylene, 1-butene, 1-pentene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicocene, and the like. In the present invention, these α-olefins can be used solely or in combination of two or more kinds thereof.

In particular, it is preferable to use a homopolymer or copolymer of an α-olefin having the carbon number of from 2 to 4 among the above-described α-olefins.

Specifically, examples of the olefin-based resin in the present invention include the following (co)polymers.

(1) An ethylene homopolymer (the manufacturing method may be any one of a low pressure method and a high pressure method)
(2) A copolymer of ethylene and not more than 10 % by mole of other α-olefin or a vinyl monomer such as vinyl acetate, ethyl acrylate, etc.
(3) A propylene homopolymer
(4) A random copolymer of propylene and not more than 10 % by mole of other α-olefin
(5) A block copolymer of propylene and not more than 30 % by mole of other α-olefin
(6) A 1-butene homopolymer
(7) A random copolymer of 1-butene and not more than 10 % by mole of other α-olefin
(8) A 4-methyl-1-pentene homopolymer
(9) A random copolymer of 4-methyl-1-pentene and not more than 20 % by mole of other α-olefin

Among the foregoing, as the olefin-based resin which is preferably used in the present invention, there can be exemplified (1) an ethylene homopolymer, (3) a propylene homopolymer, (4) a random copolymer of propylene and not more than 10 % by mole of other α-olefin, and (5) a block copolymer of propylene and not more than 30 % by mole of other α-olefin.

It is desirable that the olefin-based resin which is used in the present invention has a melt flow rate (MFR; in conformity with ASTM D1238 at 230°C and at a load of 2.16 kg) falling within the range of from 0.1 to 100 g/10 min, and moreover from 0.3 to 60 g/ 10 min.

A difference between the carbon number of the olefin-based resin and the carbon number of the non-conjugated olefin in the copolymer is preferably not more than 3. As an example, in the case where the olefin-based resin is polyethylene, the non-conjugated olefin in the copolymer is preferably ethylene.

As the olefin-based resin in the present invention, one having a solubility parameter δ (SP value) in the range of from 7 to 9 $(cal\cdot cc^{-1})^{1/2}$ is preferably used. By allowing the solubility parameter δ (SP value) of the olefin-based resin to fall within this range, its compatibility with the copolymer becomes favorable, so that the impact resistance and fracture properties of the resin composition can be made more favorable.

The solubility parameter δ $(cal\cdot cc^{-1})^{1/2}$ as referred to herein is defined by the following equation (1) taking into consideration an intermolecular attractive force in the Hildebrand-Scatchard theory of solutions.

$$\delta = (\Delta E_V / V_1)^{1/2} \qquad (1)$$

Here, $\Delta E_V$ represents an evaporation energy; $V_1$ represents a molar volume; and $\Delta E_V/V_1$ represents a cohesive energy density (CED).

Incidentally, the SP value in the present invention is a value calculated according to the Fedors method.

<Copolymer of conjugated diene compound and non-conjugated olefin>

• Constitution of copolymer of conjugated diene compound and non-conjugated olefin

The cis-1,4-bond content of the conjugated diene compound-derived segment (conjugated diene segment) of the copolymer of a conjugated diene compound and a non-conjugated olefin which is used in the present invention is required to be 50 % or more, and it is preferably more than 92 %, and more preferably 95 % or more. When the cis-1,4-bond content of the conjugated diene compound segment (conjugated diene compound-derived segment) is 50 % or more, a low glass transition point (Tg) can be kept, and according to this, the impact resistance at low temperatures is improved.

By regulating the cis-1, 4-bond content of the conjugated diene compound-derived segment (conjugated diene segment) to more than 92 %, it becomes possible to enhance the impact resistance at low temperatures, crack growth resistance, weather resistance, and heat resistance. In addition, by regulating the cis-1,4-bond content of the conjugated diene compound-derived segment (conjugated diene segment) to 95 % or more, the impact resistance at low temperatures can be much more increased.

The cis-1,4-bond content is an amount in the conjugated diene compound-derived segment but not a proportion relative to the whole of the copolymer.

A proportion of the conjugated diene compound in the copolymer of a conjugated diene compound and a non-conjugated olefin is from 30 % by mole to 80 % by mole. When the proportion of the conjugated diene compound is 30 % by mole or more, the impact resistance becomes favorable; whereas when it is not more than 80 % by mole, since a sufficient amount of the non-conjugated olefin component is present, the compatibility with the olefin-based resin becomes more favorable, and hence, such is preferable.

The non-conjugated olefin is preferably an acyclic olefin. In addition, the non-conjugated olefin is preferably an $\alpha$-olefin having the carbon number of from 2 to 10. Since the $\alpha$-olefin has a double bond at an $\alpha$-position of the olefin, the copolymerization with the conjugated diene compound can be efficiently conducted. In consequence, as the non-conjugated olefin, there are suitably exemplified $\alpha$-olefins such as ethylene, propylene, 1-butene, 1-pentene, 1-hexene, 1-heptene, 1-octene, etc. Of these, ethylene, propylene, and 1-butene are preferable, and ethylene is more preferable. These non-conjugated olefins may be used solely, or may also be used in combination of two or more kinds thereof. Incidentally, the olefin refers to a compound that is an aliphatic unsaturated hydrocarbon and having one or more carbon-carbon double bonds.

The conjugated diene compound is preferably one having the carbon number of from 4 to 12. Specifically, examples of this conjugated diene compound include 1,3-butadiene, isoprene, 1,3-pentadiene, 2,3-dimethylbutadiene, and the like. Of these, 1,3-butadiene and isoprene are preferable. In addition, these conjugated diene compounds may be used solely, or may also be used in combination of two or more kinds thereof.

Even by using any of the specific examples of the conjugated diene compound described above, the copolymer of the present invention can be prepared by means of the same mechanism.

The copolymer of a conjugated diene compound and a non-conjugated olefin is free from the occurrence of a problem of reduction in the molecular weight, and its weight average molecular weight (Mw) is not particularly limited. From the viewpoint of application to polymer structural materials, a weight average molecular weight (Mw) as reduced into polystyrene of the copolymer of a conjugated diene compound and a non-conjugated olefin is preferably from 10,000 to 10,000,000, more preferably from 10,000 to 1,000,000, and still more preferably from 50,000 to 600,000. When the Mw exceeds 10,000,000, there is a concern that molding processability is deteriorated.

In the copolymer according to the present invention, the content of a 1,2-adduct segment (inclusive of a 3,4-adduct segment) of the conjugated diene compound in the conjugated diene compound-derived segment is preferably not more than 5 %, more preferably not more than 3 %, and still more preferably not more than 2.5 %.

When the content of the 1,2-adduct segment (inclusive of the 3,4-adduct segment) of the conjugated diene compound in the conjugated diene compound-derived segment is not more than 5 %, the weather resistance and ozone resistance of the copolymer according to the present invention can be more enhanced. Furthermore, when the content of the 1,2-adduct (inclusive of the 3, 4-adduct) of the conjugated diene compound segment is not more than 2.5 %, the ozone resistance and fatigue resistance of the copolymer of the present invention can be more enhanced.

The content of the 1,2-adduct segment (inclusive of the 3,4-adduct segment) of the conjugated diene compound in the conjugated diene compound-derived segment is an amount in the conjugated diene compound-derived segment but not a proportion relative to the whole of the copolymer.

Incidentally, in the case where the conjugated diene compound is butadiene, the content of the 1,2-adduct segment (inclusive of the 3,4-adduct segment) of the conjugated diene compound segment (the content of the 1,2-adduct segment (inclusive of the 3,4-adduct segment) of the conjugated diene compound of the conjugated diene compound-derived segment) has the same meaning as that of a 1,2-vinyl bond amount.

In addition, a molecular weight distribution (Mw/Mn) expressed by a ratio of a weight average molecular weight

(Mw) to a number average molecular weight (Mn) is preferably not more than 10, and more preferably not more than 6. This is because when the molecular weight distribution exceeds 10, the physical properties do not become homogenous.

Here, the average molecular weight and the molecular weight distribution can be determined by gel permeation chromatography (GPC) with polystyrene as a standard substance.

The copolymer of a conjugated diene compound and a non-conjugated olefin according to the present invention is required to be a block copolymer.

A structure of the block copolymer is any one of $(A-B)_x$, $A-(B-A)_x$, and $B-(A-B)_x$ (wherein A is a block segment composed of a monomer unit of a conjugated diene compound; B is a block segment composed of a monomer unit of a non-conjugated olefin; and x is an integer of 1 or more). Incidentally, a block copolymer provided with a plurality of the (A-B) or (B-A) structures is called a multi-block copolymer.

In the present invention, the copolymer of a conjugated diene compound and a non-conjugated olefin is preferably a block copolymer. In the case where the copolymer of a conjugated diene compound and a non-conjugated olefin is a block copolymer, since the block segment composed of a monomer unit of a non-conjugated olefin exhibits static crystallinity, the block copolymer is excellent in terms of mechanical properties such as breaking strength, etc. and gas barrier properties.

• Manufacturing method of copolymer of conjugated diene compound and non-conjugated olefin

Next, the manufacturing method of the copolymer according to the present invention is described in detail. However, the manufacturing method as described below in detail is merely an exemplification to the bitter end. In the copolymer according to the present invention, a conjugated diene compound and a non-conjugated olefin can be polymerized in the presence of a polymerization catalyst or a polymerization catalyst composition.

In the manufacturing method of the copolymer of a conjugated diene compound and a non-conjugated olefin, the polymerization can be conducted in the same manner as that in a usual manufacturing method of a polymer using a coordinated ionic polymerization catalyst, except for using a polymerization catalyst or a first, second or third polymerization catalyst composition as described later. The polymerization catalyst or polymerization catalyst composition which is used in the present invention is described later.

As the polymerization method, an arbitrary method such as a solution polymerization method, a suspension polymerization method, a liquid phase block polymerization method, an emulsion polymerization method, a gas phase polymerization method, a solid phase polymerization method, etc. can be adopted. In the case of using a solvent for the polymerization reaction, it is sufficient that the solvent to be used may be inactive in the polymerization reaction, and examples thereof include toluene, cyclohexane, n-hexane, and a mixture thereof, and the like.

As for the manufacturing method of the copolymer of a conjugated diene compound and a non-conjugated olefin, for example, (1) constituent components of a polymerization catalyst composition may be separately provided into a polymerization reaction system containing, as monomers, a conjugated diene compound and a non-conjugated olefin other than the conjugated diene compound, to prepare a polymerization catalyst composition in the reaction system; or (2) a previously prepared polymerization catalyst composition may be provided into a polymerization reaction system. In addition, in (2), the provision of a metallocene complex (active species) having been activated with a promoter is also included. Incidentally, the use amount of the metallocene complex contained in the polymerization catalyst composition is preferably in the range of from 0.0001 to 0.01 times by mole relative to the total sum of the conjugated diene compound and the non-conjugated olefin other than the conjugated diene compound.

In addition, in the manufacturing method of the copolymer of a conjugated diene compound and a non-conjugated olefin according to the present invention, the polymerization may be terminated using a polymerization terminator such as methanol, ethanol, isopropanol, etc.

In the manufacturing method according to the present invention, the polymerization reaction of a conjugated diene compound and a non-conjugated olefin is preferably conducted under an atmosphere of an inert gas, preferably a nitrogen gas or an argon gas. Though a polymerization temperature of the polymerization reaction is not particularly limited, for example, it is preferably in the range of from -100°C to 200°C, and the polymerization temperature may also be approximately room temperature. Incidentally, when the polymerization temperature is increased, the cis-1,4 selectivity of the polymerization reaction is possibly lowered. Incidentally, in order to sufficiently take the conjugated diene compound and the non-conjugated olefin into the polymerization reaction system, a pressure of the polymerization reaction is preferably in the range of from 0.1 to 10.0 MPa. In addition, a reaction time of the polymerization reaction is not particularly limited, and for example, it is preferably in the range of from 1 second to 10 days. However, the reaction time can be properly selected depending upon conditions such as the kind of monomer to be polymerized, the kind of catalyst, the polymerization temperature, etc.

In the manufacturing method according to the present invention, on the occasion of the polymerization of the conjugated diene compound and the non-conjugated olefin other than the conjugated diene compound, a pressure of the non-conjugated olefin is preferably from 0.1 MPa to 10 MPa. When the pressure of the non-conjugated olefin is 0.1

MPa or more, the non-conjugated olefin can be efficiently introduced into the reaction mixture. In addition, even when the pressure of the non-conjugated olefin is excessively increased, the effect for efficiently introducing the non-conjugated olefin reaches a ceiling, and hence, the pressure of the non-conjugated olefin is preferably not more than 10 MPa.

In the manufacturing method of the copolymer, on the occasion of the polymerization of the conjugated diene compound and the non-conjugated olefin other than the conjugated diene compound, at the time of starting the polymerization, it is preferable that a concentration (mole/L) of the conjugated diene compound and a concentration (mole/L) of the non-conjugated olefin satisfy a relation of the following equation. By regulating a (concentration of the non-conjugated olefin) / (concentration of the conjugated diene compound) value to 1 or more, the non-conjugated olefin can be efficiently introduced into the reaction mixture.

(Concentration of the non-conjugated olefin) / (concentration of the conjugated diene compound) ≥ 1.0

More preferably, it is preferable that a relation of the following equation is satisfied.

(Concentration of the non-conjugated olefin) / (concentration of the conjugated diene compound) ≥ 1.3

Still more preferably, it is preferable that a relation of the following equation is satisfied.

(Concentration of the non-conjugated olefin) / (concentration of the conjugated diene compound) ≥ 1.7

In accordance with the manufacturing method according to the present invention, it is possible to copolymerize, as monomers, the conjugated diene compound and the non-conjugated olefin in the same method as a usual manufacturing method of a polymer using a coordinated ionic polymerization catalyst, except for using the above-described polymerization catalyst or polymerization catalyst composition.

• First polymerization catalyst composition

Next, the first polymerization catalyst composition which is used for the manufacturing method of the copolymer of a conjugated diene compound and a non-conjugated olefin according to the present invention is described.

As the first polymerization catalyst composition, there is exemplified a polymerization catalyst composition (hereafter also referred to as a "first polymerization catalyst composition") containing at least one complex selected from the group consisting of:

a metallocene complex represented by the following general formula (I):

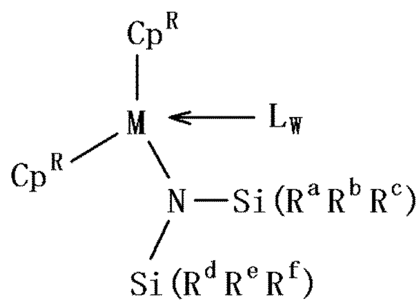

· · · (I)

(wherein M represents a lanthanoid element, scandium, or yttrium; each $Cp^R$ independently represents unsubstituted or substituted indenyl; each of $R^a$ to $R^f$ independently represents an alkyl group having the carbon number of from 1 to 3 or a hydrogen atom; L represents a neutral Lewis base; and w represents an integer of from 0 to 3);

a metallocene complex represented by the following general formula (II):

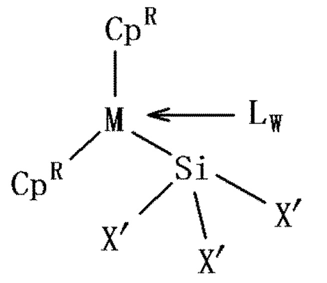

• • • (II)

(wherein M represents a lanthanoid element, scandium, or yttrium; each $Cp^R$ independently represents unsubstituted or substituted indenyl; X' represents a hydrogen atom, a halogen atom, an alkoxide group, a thiolate group, an amide group, a silyl group, or a hydrocarbon group having the carbon number of from 1 to 20; L represents a neutral Lewis base; and w represents an integer of from 0 to 3); and

a half-metallocene cation complex represented by the following general formula (III):

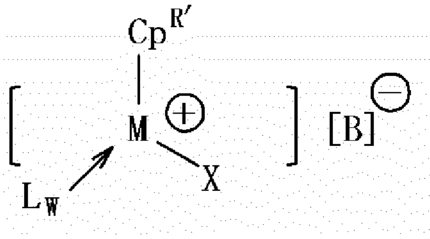

• • • (III)

(wherein M represents a lanthanoid element, scandium, or yttrium; $Cp^{R'}$ represents unsubstituted or substituted cyclopentadienyl, indenyl, or fluorenyl; X represents a hydrogen atom, a halogen atom, an alkoxide group, a thiolate group, an amide group, a silyl group, or a hydrocarbon group having the carbon number of from 1 to 20; L represents a neutral Lewis base; w represents an integer of from 0 to 3; and $[B]^-$ represents a non-coordinating anion.)

The first polymerization catalyst composition may further contain other component which is contained in a usual polymerization catalyst composition containing a metallocene complex, for example, a promoter, etc. Here, the metallocene complex is a complex compound in which one or two or more cyclopentadienyls or derivatives thereof are bound to a central metal thereof. In particular, the metallocene complex in which one cyclopentadienyl or its derivative is bound to the central metal may also be called a half-metallocene complex.

Incidentally, in the polymerization reaction system, a concentration of the complex contained in the first polymerization catalyst composition is preferably in the range of from 0.1 to 0.0001 moles/L.

In the metallocene complexes represented by the foregoing general formulae (I) and (II), $Cp^R$ in the formulae is unsubstituted indenyl or substituted indenyl. $Cp^R$ in which an indenyl ring is a basic skeleton may be represented by $C_9H_{7-x}R_x$ or $C_9H_{11-x}R_x$. Here, x is an integer of from 0 to 7 or from 0 to 11. In addition, each R is independently preferably a hydrocarbyl group or a metalloid group. The carbon number of the hydrocarbyl group is preferably from 1 to 20, more preferably from 1 to 10, and still more preferably from 1 to 8. Specifically, as the hydrocarbyl group, there are suitably exemplified a methyl group, an ethyl group, a phenyl group, a benzyl group, and the like. On the other hand, examples of a metalloid of the metalloid group include Ge of germyl, Sn of stannyl, and Si of silyl. In addition, the metalloid group preferably has a hydrocarbyl group. The hydrocarbyl group which the metalloid group has is the same as the above-described hydrocarbyl group. Specifically, examples of the metalloid group include a trimethylsilyl group and the like. Specifically, examples of the substituted indenyl include 2-phenylindenyl, 2-methylindenyl, and the like. Incidentally, the two $Cp^R$s in the general formulae (I) and (II) may be the same as or different from each other.

In the half-metallocene cation complex represented by the foregoing general formula (III), $Cp^{R'}$ in the formula is unsubstituted or substituted cyclopentadienyl, indenyl, or fluorenyl, and of these, unsubstituted or substituted indenyl is preferable. $Cp^{R'}$ in which a cyclopentadienyl ring is a basic skeleton may be represented by $C_5H_{5-x}R_x$. Here, x is an integer of from 0 to 5. In addition, each R is independently preferably a hydrocarbyl group or a metalloid group. The carbon number of the hydrocarbyl group is preferably from 1 to 20, more preferably from 1 to 10, and much more preferably from 1 to 8. Specifically, as the hydrocarbyl group, there are suitably exemplified a methyl group, an ethyl group, a phenyl group, a benzyl group, and the like.

On the other hand, examples of a metalloid of the metalloid group include Ge of germyl, Sn of stannyl, and Si of silyl. In addition, the metalloid group preferably has a hydrocarbyl group, and the hydrocarbyl group which the metalloid

group has is the same as the above-described hydrocarbyl group. Specifically, examples of the metalloid group include a trimethylsilyl group and the like. Specifically, examples of $Cp^{R'}$ in which a cyclopentadienyl ring is a basic skeleton include those described below.

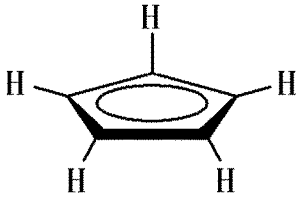 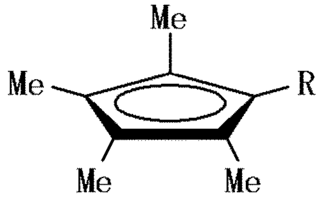

(In the formula, R represents a hydrogen atom, a methyl group, or an ethyl group.)

In the general formula (III), $Cp^{R'}$ in which the above-described indenyl ring is a basic skeleton is defined in the same way as that of $Cp^R$ in the general formula (I). Preferred examples thereof are also the same.

In the general formula (III), $Cp^{R'}$ in which the above-described fluorenyl ring is a basic skeleton may be represented by $C_{13}H_{9-x}R_x$ or $C_{13}H_{17-x}R_x$. Here, x is an integer of from 0 to 9 or from 0 to 17. In addition, each R is independently preferably a hydrocarbyl group or a metalloid group. The carbon number of the hydrocarbyl group is preferably from 1 to 20, more preferably from 1 to 10, and still more preferably from 1 to 8. Specifically, as the hydrocarbyl group, there are suitably exemplified a methyl group, an ethyl group, a phenyl group, a benzyl group, and the like. On the other hand, examples of a metalloid of the metalloid group include Ge of germyl, Sn of stannyl, and Si of silyl. In addition, the metalloid group preferably has a hydrocarbyl group. The hydrocarbyl group which the metalloid group has is the same as the above-described hydrocarbyl group. Specifically, examples of the metalloid group include a trimethylsilyl group and the like.

The central metal M in the general formulae (I), (II) and (III) is a lanthanoid element, scandium, or yttrium. As for the lanthanoid element, fifteen elements of Atomic Numbers 57 to 71 are included, and all of them may be usable. As the central metal M, there are suitably exemplified samarium Sm, neodymium Nd, praseodymium Pr, gadolinium Gd, cerium Ce, holmium Ho, scandium Sc, and yttrium Y.

The metallocene complex represented by the general formula (I) contains a silylamide ligand $[-N(SiR_3)_2]$ . Each of the R groups contained in the silylamide ligand ($R^a$ to $R^f$ in the general formula (I)) independently represents an alkyl group having the carbon number of from 1 to 3 or a hydrogen atom. In addition, it is preferable that at least one of $R^a$ to $R^f$ is a hydrogen atom. When at least one of $R^a$ to $R^f$ is a hydrogen atom, the synthesis of the catalyst become easy, and the bulkiness around silicon becomes low, and hence, the non-conjugated olefin is introduced easily. From the same viewpoint, it is more preferable that at least one of $R^a$ to $R^c$ is a hydrogen atom, and at least one of $R^d$ to $R^f$ is a hydrogen atom. Furthermore, the alkyl group is preferably a methyl group.

The metallocene complex represented by the general formula (II) contains a silyl ligand $[-SiX'_3]$. X' which is contained in the silyl ligand $[-SiX'_3]$ is a group defined in the same way as that of X in the general formula (III) as described below, and preferred examples thereof are also the same.

In the general formula (III), X is a group selected from the group consisting of a hydrogen atom, a halogen atom, an alkoxide group, a thiolate group, an amide group, a silyl group, and a hydrocarbon group having the carbon number of from 1 to 20. Here, examples of the alkoxide group include aliphatic alkoxy groups such as a methoxy group, an ethoxy group, a propoxy group, an n-butoxy group, an isobutoxy group, a sec-butoxy group, a tert-butoxy group, etc.; and aryl oxide groups such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, a 2-isopropyl-6-neopentylphenoxy group, etc. Of these, a 2,6-di-tert-butylphenoxy group is preferable.

In the general formula (III), examples of the thiolate group represented by X include aliphatic thiolate groups such as a thiomethoxy group, a thioethoxy group, a thiopropoxy group, a thio-n-butoxy group, a thioisobutoxy group, a thio-sec-butoxy group, a thio-tert-butoxy group, etc.; and aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, a 2,4,6-triisopropylthiophenoxy group, etc. Of these, a 2,4,6-triisopropylthiophenoxy group is preferable.

In the general formula (III), examples of the amide group represented by X include aliphatic amide groups such as a dimethylamide group, a diethylamide group, a diisopropylamide group, etc.; aryl amide groups such as a phenylamide group, a 2,6-di-tert-butylphenylamide group, a 2,6-diisopropylphenylamide group, a 2,6-dineopentylphenylamide group, a 2-tert-butyl-6-isopropylphenylamide group, a 2-tert-butyl-6-neopentylphenylamide group, a 2-isopropyl-6-neopentylphenylamide group, a 2,4,6-tert-butylphenylamide group, etc.; and bistrialkylsilylamide groups such as a bistrimethylsilylamide group, etc. Of these, a bistrimethylsilylamide group is preferable.

In the general formula (III), examples of the silyl group represented by X include a trimethylsilyl group, a

tris(trimethylsilyl)silyl group, a bis(trimethylsilyl)methylsilyl group, a trimethylsilyl(dimethyl)silyl group, a triisopropylsilyl(bistrimethylsilyl)silyl group, and the like. Of these, a tris(trimethylsilyl)silyl group is preferable.

In the general formula (III), though the halogen atom represented by X may be any of a fluorine atom, a chlorine atom, a bromine atom, or an iodine atom, it is preferably a chlorine atom or a bromine atom. In addition, specifically, examples of the hydrocarbon group having the carbon number of from 1 to 20 as represented by X include linear or branched aliphatic hydrocarbon groups such as a methyl group, an ethyl group, an n-propyl group, an isopropyl group, an n-butyl group, an isobutyl group, a sec-butyl group, a tert-butyl group, a neopentyl group, a hexyl group, an octyl group, etc.; aromatic hydrocarbon groups such as a phenyl group, a tolyl group, a naphthyl group, etc. ; and aralkyl groups such as a benzyl group, etc.; and besides, silicon atom-containing hydrocarbon groups such as a trimethylsilylmethyl group, a bistrimethylsilylmethyl group, etc.; and the like. Of these, a methyl group, an ethyl group, an isobutyl group, a trimethylsilylmethyl group, and the like are preferable.

In the general formula (III), X is preferably a bistrimethylsilylamide group or a hydrocarbon group having the carbon number of from 1 to 20.

In the general formula (III), examples of the non-coordinating anion represented by $[B]^-$ include a tetravalent boron anion. Specifically, examples of the tetravalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl)borate, [tris(pentafluorophenyl), phenyl]borate, tridecahydride-7,8-dicarbaundecaborate, and the like. Of these, tetrakis(pentafluorophenyl)borate is preferable.

Each of the metallocene complexes represented by the foregoing general formulae (I) and (II) and the half-metallocene cation complex represented by the foregoing general formula (III) further contains the neutral Lewis base L in the number of from 0 to 3, and preferably from 0 to 1. Here, examples of the neutral Lewis base L include tetrahydrofuran, diethyl ether, dimethylaniline, trimethylphosphine, lithium chloride, a neutral olefin, a neutral diolefin, and the like. Here, in the case where the above-described complex contains a plurality of the neutral Lewis bases L, the neutral Lewis bases L may be the same as or different from each other.

In addition, each of the metallocene complexes represented by the foregoing general formulae (I) and (II) and the half-metallocene cation complex represented by the foregoing general formula (III) may be present as a monomer, or may be present as a dimer or a multimer.

The metallocene complex represented by the foregoing general formula (I) can be, for example, obtained by allowing a lanthanoid trishalide, a scandium trishalide, or a yttrium trishalide to react with a salt (for example, a potassium salt or a lithium salt) of indenyl and a salt (for example, a potassium salt or a lithium salt) of a bis (trialkylsilyl) amide in a solvent. Incidentally, since the reaction temperature may be approximately room temperature, the complex can be manufactured under moderate conditions. In addition, though the reaction time is arbitrary, it is from about several hours to several ten hours. Though the reaction solvent is not particularly limited, it is preferably a solvent capable of dissolving the raw materials and product therein, and for example, toluene may be used. An example of the reaction for obtaining the metallocene complex represented by the general formula (I) is shown below.

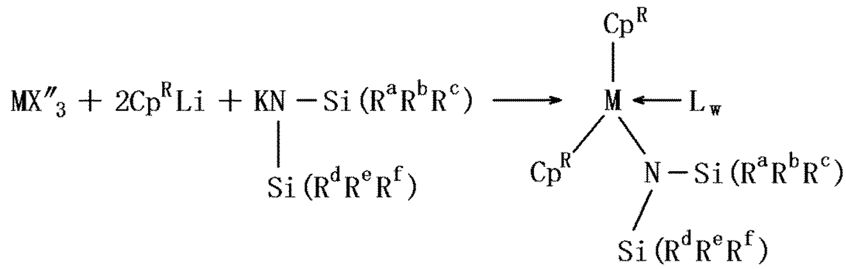

(I)

(In the formula, X" represents a halide.)

The metallocene complex represented by the foregoing general formula (II) can be, for example, obtained by allowing a lanthanoid trishalide, a scandium trishalide, or a yttrium trishalide to react with a salt (for example, a potassium salt or a lithium salt) of indenyl and a salt (for example, a potassium salt or a lithium salt) of silyl in a solvent. Incidentally, since the reaction temperature may be approximately room temperature, the complex can be manufactured under moderate conditions. In addition, though the reaction time is arbitrary, it is from about several hours to several ten hours. Though the reaction solvent is not particularly limited, it is preferably a solvent capable of dissolving the raw materials and product therein, and for example, toluene may be used. An example of the reaction for obtaining the metallocene complex represented by the general formula (II) is shown below.

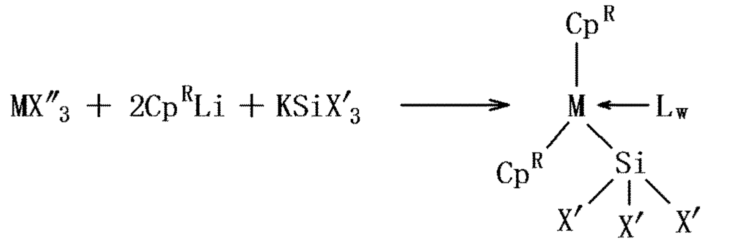

(II)

(In the formulae, X" represents a halide.)

The half-metallocene cation complex represented by the foregoing general formula (III) can be, for example, obtained by the following reaction.

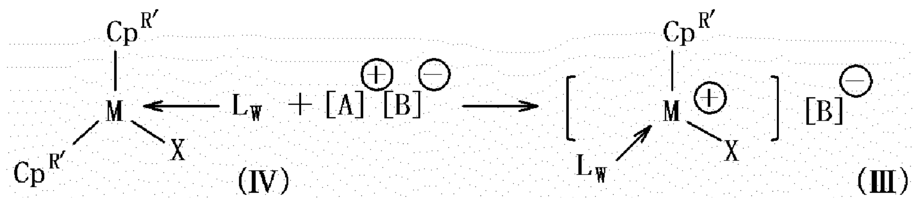

(IV) (III)

Here, in the compound represented by the general formula (IV), M represents a lanthanoid element, scandium, or yttrium; each $Cp^{R'}$ represents unsubstituted or substituted cyclopentadienyl, indenyl, or fluorenyl; X represents a hydrogen atom, a halogen atom, an alkoxide group, a thiolate group, an amide group, a silyl group, or a hydrocarbon group having the carbon number of from 1 to 20; L represents a neutral Lewis base; and w represents an integer of from 0 to 3. In addition, in the ionic compound represented by the general formula $[A]^+[B]^-$, $[A]^+$ represents a cation, and $[B]^+$ represents a non-coordinating anion.

Examples of the cation represented by $[A]^+$ include a carbonium cation, an oxonium cation, an amine cation, a phosphonium cation, a cycloheptatrienyl cation, a transition metal-containing ferrocenium cation, and the like. Examples of the carbonium cation include trisubstituted carbonium cations such as a triphenylcarbonium cation, a tri (substituted phenyl)carbonium cation, etc. Specifically, examples of the tri(substituted phenyl)carbonium cation include a tri(methylphenyl)carbonium cation and the like. Examples of the amine cation include trialkylammonium cations such as a trimethylammonium cation, a triethylammonium cation, a tripropylammonium cation, a tributylammonium cation, etc.; N,N-dialkylanilinium cations such as an N,N-dimethylanilinium cation, an N,N-diethylanilinium cation, an N,N-2,4,6-pentamethylanilinium cation, etc.; dialkylammonium cations such as a diisopropylammonium cation, a dicyclohexylammonium cation, etc.; and the like. Examples of the phosphonium cation include triarylphosphonium cations such as a triphenylphosphonium cation, a tri(methylphenyl)phosphonium cation, a tri(dimethylphenyl)phosphonium cation, etc.; and the like. Of these cations, an N,N-dialkylanilinium cation or a carbonium cation is preferable, and an N,N-dialkylanilinium cation is especially preferable.

The ionic compound represented by the general formula $[A]^+[B]^-$, which is used for the above-described reaction, is a compound composed of a combination of the selected non-coordinating anion and cation and is preferably N,N-dimethylanilinium tetrakis(pentafluorophenyl)borate, triphenylcarbonium tetrakis (pentafluorophenyl) borate, or the like. In addition, the ionic compound represented by the general formula $[A]^+[B]^-$ is added in an amount of preferably from 0.1 to 10 times by mole, and more preferably about 1 time by mole relative to the metallocene complex. Incidentally, in the case of using the half-metallocene cation complex represented by the general formula (III) for the polymerization reaction, the half-metallocene cation complex represented by the general formula (III) may be supplied into the polymerization reaction system as it is, or the compound represented by the general formula (IV) and the ionic compound represented by the general formula $[A]^+[B]^-$, which are used for the above-described reaction, may be supplied separately into the polymerization reaction system to form the half-metallocene cation complex represented by the general formula (III) in the reaction system. In addition, by using a combination of the metallocene complex represented by the general formula (I) or (II) and the ionic compound represented by the general formula $[A]^+[B]^-$, the half-metallocene cation complex represented by the general formula (III) can also be formed in the reaction system.

It is preferable to determine each of the structures of the metallocene complexes represented by the general formulae (I) and (II) and the half-metallocene cation complex represented by the general formula (III) by means of an X-ray structural analysis.

A promoter which can be used for the first polymerization catalyst composition may be arbitrarily selected from components used as a promoter in a usual polymerization catalyst composition containing a metallocene complex. As the promoter, for example, there are suitably exemplified an aluminoxane, an organoaluminum compound, the above-described ionic compounds, and the like. These promoters may be used solely, or may also be used in combination of two or more kinds thereof.

As the aluminoxane, an alkylaluminoxane is preferable, and examples thereof include methylaluminoxane (MAO), a modified methylaluminoxane, and the like. In addition, as the modified methylaluminoxane, MMAO-3A (available from Tosoh Finechem Corporation) and the like are preferable. Incidentally, preferably, the content of the aluminoxane in the first polymerization catalyst composition is regulated such that an element ratio Al/M of the aluminum element Al in the aluminoxane to the central metal M in the metallocene complex is from about 10 to 1,000, and preferably about 100.

On the other hand, the organoaluminum compound is preferably an organoaluminum compound represented by the general formula: AlRR'R" (wherein each of R and R' independently represents a hydrocarbon group having the carbon number of from 1 to 10 or a hydrogen atom, and R" represents a hydrocarbon group having the carbon number of from 1 to 10). Examples of the organoaluminum compound include a trialkylaluminum, a dialkylaluminum chloride, an alkylaluminum dichloride, a dialkylaluminum hydride, and the like. Of these, a trialkylaluminum is preferable. In addition, examples of the trialkylaluminum include triethylaluminum, triisobutylalumimim, and the like. Incidentally, the content of the organoaluminum compound in the polymerization catalyst composition is preferably from 2 to 50 times by mole, and more preferably about 10 times by mole relative to the metallocene complex.

Furthermore, in the first polymerization catalyst composition, by combining each of the metallocene complexes represented by the general formulae (I) and (II) and the half-metallocene cation complex represented by the foregoing general formula (III) with an adequate promoter, the cis-1,4-bond content or the molecular weight of the resulting copolymer can be increased.

• Second polymerization catalyst composition

Next, the second polymerization catalyst composition which is used for the manufacturing method of the copolymer of a conjugated diene compound and a non-conjugated olefin according to the present invention is described.

As the second polymerization catalyst composition, there can be suitably exemplified a polymerization catalyst composition (hereafter also referred to as a "second polymerization catalyst composition") containing:

(A) component: a rare earth element compound or a reaction product of a rare earth element compound and a Lewis base, which is the rare earth element compound or a reaction product not having a bond between a rare earth element and carbon, and

(B) component: at least one member selected from the group consisting of (B-1) an ionic compound composed of a non-coordinating anion and a cation, (B-2) an aluminoxane, and (B-3) at least one halogen compound of a Lewis acid, a complex compound of a metal halide and a Lewis base, and an active halogen-containing organic compound.

In the case where the second polymerization catalyst composition contains at least one member of the ionic compound (B-1) and the halogen compound (B-3), the second polymerization catalyst composition further contains, as a component (C), an organometallic compound represented by the following general formula (X):

$$YR^1_aR^2_bR^3_c \qquad (X)$$

(wherein Y is a metal selected from metals of Groups 1, 2, 12 and 13 of the Periodic Table; $R^1$ and $R^2$ are the same as or different from each other and are a hydrocarbon group having the carbon number of from 1 to 10 or a hydrogen atom; $R^3$ is a hydrocarbon group having the carbon number of from 1 to 10, provided that $R^3$ may be the same as or different from $R^1$ or $R^2$; when Y is a metal selected from metals of Group 1 of the Periodic Table, then not only a is 1, but b and c are 0; when Y is a metal selected from metals of Groups 2 and 12 of the Periodic Table, then not only a and b are 1, but c is 0; and when Y is a metal selected from metals of Group 13 of the Periodic Table, then a, b, and c are 1.)

The second polymerization catalyst composition which is used for the manufacturing method of the copolymer is required to contain the components (A) and (B). Here, in the case where the polymerization catalyst composition contains at least one member of the ionic compound (B-1) and the halogen compound (B-3), the polymerization catalyst composition is required to further contain an organometallic compound represented by the following general formula (X):

$$YR^1_aR^2_bR^3_c \qquad (X)$$

(In the formula, Y is a metal selected from metals of Groups 1, 2, 12 and 13 of the Periodic Table; $R^1$ and $R^2$ are the same as or different from each other and are a hydrocarbon group having the carbon number of from 1 to 10 or a hydrogen atom; $R^3$ is a hydrocarbon group having the carbon number of from 1 to 10, provided that $R^3$ may be the same as or different from $R^1$ or $R^2$; when Y is a metal selected from metals of Group 1 of the Periodic Table, then not only a is 1, but b and c are 0; when Y is a metal selected from metals of Groups 2 and 12 of the Periodic Table, then

not only a and b are 1, but c is 0; and when Y is a metal selected from metals of Group 13 of the Periodic Table, then a, b, and c are 1.)

Since the ionic compound (B-1) and the halogen compound (B-3) do not have a carbon atom which is to be supplied into the component (A), the component (C) is necessary as a carbon supply source into the component (A). Incidentally, even in the case where the polymerization catalyst composition contains the aluminoxane (B-2), the polymerization catalyst composition can contain the component (C). In addition, the second polymerization catalyst composition may contain other components which are contained in a usual polymerization catalyst composition of a rare earth element compound system, for example, a promoter or the like.

The component (A) which is used for the second polymerization catalyst composition is a rare earth element compound or a reaction product of a rare earth element compound and a Lewis base. Here, the rare earth element compound and the reaction product of a rare earth element compound and a Lewis base do not have a bond between a rare earth element and carbon. In the case where the rare earth element compound and the reaction product do not have a rare earth element-carbon bond, the compound is stable and easy to be handled. The rare earth element compound as referred to herein is a compound containing a lanthanoid element which is constituted of any one of elements of Atomic Numbers 57 to 71 in the Periodic Table, scandium, or yttrium. Incidentally, as specific examples of the lanthanoid element, there can be exemplified lanthanum, cerium, praseodymium, neodymium, promethium, samarium, europium, gadolinium, terbium, dysprosium, holmium, erbium, thulium, ytterbium, and lutetium. Incidentally, the component (A) may be used solely, or may also be used in combination of two or more kinds thereof.

In addition, the rare earth element compound is preferably a salt or complex compound of a divalent or trivalent rare earth metal, and more preferably a rare earth element compound containing one or two or more ligands selected from a hydrogen atom, a halogen atom, and an organic compound residue. Furthermore, the rare earth element compound or the reaction product of a rare earth compound and a Lewis base can be represented by the following general formula (XI) or (XII):

$$M^{11}X^{11}_2 \cdot L^{11}_w \qquad (XI)$$

$$M^{11}X^{11}_3 \cdot L^{11}_w \qquad (XII)$$

(In the formulae, $M^{11}$ represents a lanthanoid element, scandium, or yttrium; each $X^{11}$ independently represents a hydrogen atom, a halogen atom, an alkoxide group, a thiolate group, an amide group, a silyl group, an aldehyde residue, a ketone residue, a carboxylic acid residue, a thiocarboxylic acid residue, or a phosphorus compound residue; $L^{11}$ represents a Lewis base; and w represents from 0 to 3.)

Specifically, examples of the group (ligand) binding to the rare earth element of the above-described rare earth element compound include a hydrogen atom; aliphatic alkoxy groups such as a methoxy group, an ethoxy group, a propoxy group, an n-butoxy group, an isobutoxy group, a sec-butoxy group, a tert-butoxy group, etc.; a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, a 2-isopropyl-6-neopentylphenoxy group; aliphatic thiolate groups such as a thiomethoxy group, a thioethoxy group, a thiopropoxy group, a thio-n-butoxy group, a thioisobutoxy group, a thio-sec-butoxy group, a thio-tert-butoxy group, etc.; aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, a 2,4,6-triisopropylthiophenoxy group, etc.; aliphatic amide groups such as a dimethylamide group, a diethylamide group, a diisopropylamide group, etc.; aryl amide groups such as a phenylamide group, a 2,6-di-tert-butylphenylamide group, a 2,6-diisopropylphenylamide group, a 2,6-dineopentylphenylamide group, a 2-tert-butyl-6-isopropylphenylamide group, a 2-tert-butyl-6-neopentylphenylamide group, a 2-isopropyl-6-neopentylphenylamide group, a 2,4,6-tert-butylphenylamide group, etc.; and bistrialkylsilylamide groups such as a bistrimethylsilylamide group, etc.; silyl groups such as a trimethylsilyl group, a tris(trimethylsilyl)silyl group, a bis(trimethylsilyl)methylsilyl group, a trimethylsilyl(dimethyl)silyl group, a triisopropylsilyl(bistrimethylsilyl)silyl group, etc.; halogen atoms such as a fluorine atom, a chlorine atom, a bromine atom, an iodine atom, etc.; and the like. Furthermore, examples thereof include residues of an aldehyde such as salicylaldehyde, 2-hydroxy-1-naphthaldehyde, 2-hydroxy-3-naphthaldehyde, etc.; residues of a hydroxyphenone such as 2'-hydroxyacetophenone, 2'-hydroxybutyrophenone, 2'-hydroxypropiophenone, etc.; residues of a diketone such as acetylacetone, benzoylacetone, propionylacetone, isobutylacetone, valerylacetone, ethylacetylacetone, etc.; residues of a carboxylic acid such as isovaleric acid, caprylic acid, octanoic acid, lauric acid, myristic acid, palmitic acid, stearic acid, isostearic acid, oleic acid, linoleic acid, cyclopentanecarboxylic acid, naphthenic acid, ethylhexanoic acid, pivalic acid, Versatic Acid [a trade name, available from Shell Chemical Corporation; a synthetic acid constituted of a mixture of isomers of a C10 monocarboxylic acid], phenylacetic acid, benzoic acid, 2-naphthoic acid, maleic acid, succinic acid, etc.; residues of a thiocarboxylic acid such as hexanethioic acid, 2,2-dimethylbutanethioic acid, decanethioic acid, thiobenzoic acid, etc.; residues of a phosphoric acid ester such as dibutyl phosphate, dipentyl phosphate, dihexyl phosphate, diheptyl phosphate, dioctyl phosphate, bis(2-ethylhexyl) phosphate, bis(1-methylheptyl) phosphate, dilauryl phosphate, dioleyl phosphate, diphenyl phosphate, bis(p-nonylphenyl) phosphate, bis(polyethylene glycol-p-nonylphenyl) phosphate, (butyl)(2-ethylhexyl) phosphate, (1-methylheptyl)(2-ethylhexyl) phosphate, (2-ethylhexyl) (p-nonylphenyl) phosphate, etc.; residues of a phosphonic acid ester such as monobutyl 2-ethylhexylphosphonate, mono-2-ethylhexyl 2-ethylhexylphosphonate, mono-2-ethylhexyl phenylphosphonate, mono-p-nonylphenyl 2-ethylhexylphosphonate, mono-2-ethylhexyl phosphonate, mono-1-methylheptyl phosphonate, mono-p-nonylphenyl phosphonate, etc.; and residues of a phosphinic acid such as dibutyl phosphinic acid, bis(2-ethylhexyl)phosphinic acid, bis(1-methylheptyl)phosphinic acid, dilauryl phosphinic acid, dioleyl phosphinic acid, diphenyl phosphinic acid, bis(p-nonylphenyl)phosphinic acid, butyl(2-ethylhexyl)phosphinic acid, (2-ethylhexyl)(1-methylheptyl)phosphinic acid, (2-ethylhexyl)(p-nonylphenyl)phosphinic acid, butyl phosphinic acid, 2-ethylhexyl phosphinic acid, 1-methylheptyl phosphinic acid, oleyl phosphinic acid, lauryl phosphinic acid, phenyl phosphinic acid, p-nonylphenyl phosphinic acid, etc. Incidentally, these ligands may be used solely, or may also be used in combination of two or more kinds thereof.

In the component (A) which is used for the second polymerization catalyst composition, examples of the Lewis base which reacts with the rare earth element compound include tetrahydrofuran, diethyl ether, dimethylaniline, trimethylphosphine, lithium chloride, a neutral olefin, a neutral diolefin, and the like. Here, in the case where the rare earth element compound reacts with a plurality of the Lewis bases (the case where w is 2 or 3 in the formulae (XI) and (XII)), the Lewis bases $L^{11}$ may be the same as or different from each other.

The component (B) which is used for the second polymerization catalyst composition is at least one compound selected from the group consisting of an ionic compound (B-1), an aluminoxane (B-2), and a halogen compound (B-3). Incidentally, the content of the total sum of the component (B) in the second polymerization catalyst composition is preferably from 0.1 to 50 times by mole relative to the component (A).

The ionic compound represented by the foregoing (B-1) is composed of a non-coordinating anion and a cation, and examples thereof include an ionic compound capable of producing a cationic transition metal compound upon a reaction with, as the component (A), a rare earth element compound or a reaction product thereof with a Lewis base, and the like. Here, examples of the non-coordinating anion include tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl)borate, [tris(pentafluorophenyl), phenyl]borate, tridecahydride-7,8-dicarbaundecaborate, and the like.

On the other hand, as the cation, there can be exemplified a carbonium cation, an oxonium cation, an ammonium cation, a phosphonium cation, a cycloheptatrienyl cation, a transition metal-containing ferrocenium cation, and the like. Specifically, examples of the carbonium cation include trisubstituted carbonium cations such as a triphenylcarbonium cation, a tri(substituted phenyl)carbonium cation, etc.; and the like. More specifically, examples of the tri (substituted phenyl)carbonium cation include a tri(methylphenyl)carbonium cation, a tri(dimethylphenyl)carbonium cation, and the like. Specifically, examples of the ammonium cation include trialkylammonium cations such as a trimethylammonium cation, a triethylammonium cation, a tripropylammonium cation, a tributylammonium cation (for example, a tri(n-butyl)ammonium cation), etc.; N,N-dialkylanilinium cations such as an N, N-dimethylanilinium cation, an N, N-diethylanilinium cation, an N,N-2,4,6-pentamethylanilinium cation, etc.; dialkylammonium cations such as a diisopropylammonium cation, a dicyclohexylammonium cation, etc.; and the like. Specifically, examples of the phosphonium cation include triarylphosphonium cations such as a triphenylphosphonium cation, a tri(methylphenyl)phosphonium cation, a tri(dimethylphenyl)phosphonium cation, etc.; and the like. In consequence, the ionic compound is preferably a compound composed of a combination of ions selected from the above-described non-coordinating anions and cations, respectively. Specifically, N,N-dimethylanilinium tetrakis(pentafluorophenyl)borate, triphenylcarbonium tetrakis(pentafluorophenyl)borate, and the like are preferable. In addition, these ionic compounds can be used solely, or can also be used in admixture of two or more kinds thereof. Incidentally, the content of the ionic compound in the second polymerization catalyst composition is preferably from 0.1 to 10 times by mole, and more preferably about 1 time by mole relative to the component (A).

The aluminoxane represented by the foregoing (B-2) is a compound which is obtained by bringing an organoaluminum compound and a condensing agent into contact with each other, and for example, there can be exemplified a chain aluminoxane or cyclic aluminoxane having a repeating unit represented by the general formula: (-Al(R')O-) (wherein R' represents a hydrocarbon group having the carbon number of from 1 to 10, a part of the hydrocarbon group may be substituted with a halogen atom and/or an alkoxy group, and a degree of polymerization of the repeating unit is preferably 5 or more, and more preferably 10 or more). Here, specifically, examples of R' include a methyl group, an ethyl group, a propyl group, an isobutyl group, and the like, with a methyl group being preferable. In addition, examples of the organoaluminum compound which is used as a raw material of the aluminoxane include trialkylaluminums such as trimethylaluminum, triethylaluminum, triisobutylaluminum, etc. and mixtures thereof, and the like, with trimethylaluminum being especially preferable. For example, an aluminoxane using, as a raw material, a mixture of trimethylaluminum and tributylaluminum can be suitably used. Incidentally, the content of the aluminoxane in the second polymerization catalyst composition is preferably adjusted such that an element ratio Al/M of the aluminum element Al of the aluminoxane to the rare earth element M constituting the component (A) is from about 10 to 1,000.

The halogen compound represented by the foregoing (B-3) is composed of at least one halogen compound of a Lewis acid, a complex compound of a metal halide and a Lewis base, and an active halogen-containing organic compound, and for example, it is able to react with, as the component (A), a rare earth element compound or a reaction product thereof with a Lewis base to produce a cationic transition metal compound, a halogenated transition metal compound, or a compound whose transition metal center is charge deficient. Incidentally, the content of the total sum of the halogen compound in the second polymerization catalyst composition is preferably from 1 to 5 times by mole relative to the component (A).

As the Lewis acid, there can be used boron-containing halogen compounds such as $B(C_6F_5)_3$, etc. and aluminum-containing halogen compounds such as $Al(C_6F_5)_3$, etc. Besides, halogen compounds containing an element belonging to Group III, IV, V, VI, or VIII of the Periodic Table can also be used. Preferably, there is exemplified an aluminum halide or an organometallic halide. In addition, the halogen element is preferably chlorine or bromine. Specifically, examples of the Lewis acid include methylaluminum dibromide, methylaluminum dichloride, ethylaluminum dibromide, ethylaluminum dichloride, butylaluminum dibromide, butylaluminum dichloride, dimethylaluminum bromide, dimethylaluminum chloride, diethylaluminum bromide, diethylaluminum chloride, dibutylaluminum bromide, dibutylaluminum chloride, methylaluminum sesquibromide, methylaluminum sesquichloride, ethylaluminum sesquibromide, ethylaluminum sesquichloride, dibutyltin dichloride, aluminum tribromide, antimony trichloride, antimony pentachloride, phosphorus trichloride, phosphorus pentachloride, tin tetrachloride, titanium tetrachloride, tungsten hexachloride, and the like. Of these, diethylaluminum chloride, ethylaluminum sesquichloride, ethylaluminum dichloride, diethylaluminum bromide, ethylaluminum sesquibromide, and ethylaluminum dibromide are especially preferable.

Examples of the metal halide constituting the complex compound of a metal halide and a Lewis base include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide, gold bromide, and the like. Of these, magnesium chloride, calcium chloride, barium chloride, manganese chloride, zinc chloride, and copper chloride are preferable, and magnesium chloride, manganese chloride, zinc chloride, and copper chloride are especially preferable.

In addition, as the Lewis base constituting the complex compound of a metal halide and a Lewis base, phosphorus compounds, carbonyl compounds, nitrogen compounds, ether compounds, alcohols, and the like are preferable. Specifically, examples thereof include tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, Versatic Acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, lauryl alcohol, and the like. Of these, tri-2-ethylhexylphosphate, tricresyl phosphate, acetylacetone, 2-ethylhexanoic acid, Versatic Acid, 2-ethylhexyl alcohol, 1-decanol, and lauryl alcohol are preferable.

The Lewis base is allowed to react in a proportion of from 0.01 to 30 moles, and preferably from 0.5 to 10 moles per mole of the metal halide. When the reaction product with this Lewis base is used, the amount of the metal remaining in the polymer can be decreased.

Examples of the active halogen-containing organic compound include benzyl chloride and the like.

The component (C) which is used for the second polymerization catalyst composition is an organometallic compound represented by the following general formula (X):

$$YR^1{}_aR^2{}_bR^3{}_c \qquad (X)$$

(wherein Y is a metal selected from metals of Groups 1, 2, 12 and 13 of the Periodic Table; $R^1$ and $R^2$ are the same as or different from each other and are a hydrocarbon group having the carbon number of from 1 to 10 or a hydrogen atom; $R^3$ is a hydrocarbon group having the carbon number of from 1 to 10, provided that $R^3$ may be the same as or different from $R^1$ or $R^2$; when Y is a metal selected from metals of Group 1 of the Periodic Table, then not only a is 1, but b and c are 0; when Y is a metal selected from metals of Groups 2 and 12 of the Periodic Table, then not only a and b are 1, but c is 0; and when Y is a metal selected from metals of Group 13 of the Periodic Table, then a, b, and c are 1), and preferably an organoaluminum compound represented by the following general formula (Xa):

$$AlR^1R^2R^3 \qquad (Xa)$$

[wherein $R^1$ and $R^2$ are the same as or different from each other and are a hydrocarbon group having the carbon number

of from 1 to 10 or a hydrogen atom; and $R^3$ is a hydrocarbon group having the carbon number of from 1 to 10, provided that $R^3$ may be the same as or different from $R^1$ or $R^2$]. Examples of the organoaluminum compound of the formula (X) include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride; ethylaluminum dihydride, n-propylaluminum dihydride, isobutylaluminum dihydride, and the like. Of these, triethylaluminum, triisobutylaluminum, diethylaluminum hydride, and diisobutylaluminum hydride are preferable. The above-described organoaluminum compound as the component (C) can be used solely, or can also be used in admixture of two or more kinds thereof. Incidentally, the content of the organoaluminum compound in the second polymerization catalyst composition is preferably from 1 to 50 times by mole, and more preferably about 10 times by mole relative to the component (A).

• Polymerization catalyst

Next, the polymerization catalyst which is used for the manufacturing method of the copolymer of a conjugated diene compound and a non-conjugated olefin according to the present invention is described.
The polymerization catalyst is a catalyst for the polymerization of a conjugated diene compound and a non-conjugated olefin, and examples thereof include a metallocene-based composite catalyst represented by the following formula (A):

$$R_aMX_bQY_b \qquad (A)$$

(In the formula, each R independently represents unsubstituted or substituted indenyl, and R coordinates to M; M represents a lanthanoid element, scandium, or yttrium; each X independently represents a hydrocarbon group having the carbon number of from 1 to 20, and X is subjected to $\mu$-coordination to M and Q; Q represents an element of Group 13 of the Periodic Table; each Y independently represents a hydrocarbon group having the carbon number of from 1 to 20 or a hydrogen atom, and Y coordinates to Q; and a and b are 2.)
As the metallocene-based composite catalyst, there is suitably exemplified a metallocene-based composite catalyst represented by the following formula (XV):

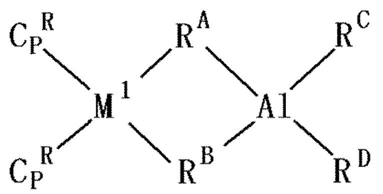

(XV)

(In the formula, $M^1$ represents a lanthanoid element, scandium, or yttrium; each $Cp^R$ independently represents unsubstituted or substituted indenyl; each of $R^a$ and $R^b$ independently represents a hydrocarbon group having the carbon number of from 1 to 20, and $R^a$ and $R^b$ are subjected to $\mu$-coordination to $M^1$ and Al, respectively; and each of $R^c$ and $R^d$ independently represents a hydrocarbon group having the carbon number of from 1 to 20 or a hydrogen atom.)
By using the metallocene-based polymerization catalyst, the copolymer of a conjugated diene compound and a non-conjugated olefin can be manufactured. In addition, by using the metallocene-based composite catalyst, for example, a catalyst obtained by previously compounding with an aluminum catalyst, it becomes possible to decrease or make zero the amount of the alkylaluminum which is used at the time of copolymer synthesis. Incidentally, when a conventional catalyst system is used, it is necessary to use a large amount of the alkylaluminum at the time of copolymer synthesis. For example, in the conventional catalyst system, it is necessary to use the alkylaluminum in an amount of 10 equivalents or more to the metal catalyst, whereas so far as the above-described metallocene-based catalyst is concerned, by adding about 5 equivalents of the alkylaluminum, an excellent catalytic action is revealed.
In the above-described metallocene-based composite catalyst, the metal M in the foregoing formula (A) is a lanthanoid element, scandium, or yttrium. As for the lanthanoid element, fifteen elements of Atomic Numbers 57 to 71 are included, and all of them may be usable. As the metal M, there are suitably exemplified samarium Sm, neodymium Nd, praseodymium Pr, gadolinium Gd, cerium Ce, holmium Ho, scandium Sc, and yttrium Y.
In the foregoing formula (A), each R independently represents unsubstituted indenyl or substituted indenyl, and R coordinates to the above-described metal M. Incidentally, specifically, examples of the substituted indenyl group include a 1,2,3-trimethylindenyl group, a heptamethylindenyl group, a 1,2,4,5,6,7-hexamethylindenyl group, and the like.
In the foregoing formula (A), Q represents an element of Group 13 of the Periodic Table. Specifically, examples

thereof include boron, aluminum, gallium, indium, thallium, and the like.

In the foregoing formula (A), each X independently represents a hydrocarbon group having the carbon number of from 1 to 20, and X is subjected to $\mu$-coordination to M and Q. Here, examples of the hydrocarbon group having the carbon number of from 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, and the like. Incidentally, the $\mu$-coordination as referred to herein means a coordination mode taking a crosslinking structure.

In the foregoing formula (A), each Y independently represents a hydrocarbon group having the carbon number of from 1 to 20 or a hydrogen atom, and Y coordinates to Q. Here, examples of the hydrocarbon group having the carbon number of from 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, and the like.

In the foregoing formula (XV), the metal $M^1$ is a lanthanoid element, scandium, or yttrium. As for the lanthanoid element, fifteen elements of Atomic Numbers 57 to 71 are included, and all of them may be usable. As the metal $M^1$, there are suitably exemplified samarium Sm, neodymium Nd, praseodymium Pr, gadolinium Gd, cerium Ce, holmium Ho, scandium Sc, and yttrium Y.

In the foregoing formulae (XV), $Cp^R$ is unsubstituted indenyl or substituted indenyl. $Cp^R$ in which an indenyl ring is a basic skeleton may be represented by $C_9H_{7-x}R_x$ or $C_9H_{11-x}R_x$. Here, x is an integer of from 0 to 7 or from 0 to 11. In addition, each R is independently preferably a hydrocarbyl group or a metalloid group. The carbon number of the hydrocarbyl group is preferably from 1 to 20, more preferably from 1 to 10, and still more preferably from 1 to 8. Specifically, as the hydrocarbyl group, there are suitably exemplified a methyl group, an ethyl group, a phenyl group, a benzyl group, and the like. On the other hand, examples of a metalloid of the metalloid group include Ge of germyl, Sn of stannyl, and Si of silyl. In addition, the metalloid group preferably has a hydrocarbyl group. The hydrocarbyl group which the metalloid group has is the same as the above-described hydrocarbyl group. Specifically, examples of the metalloid group include a trimethylsilyl group and the like. Specifically, examples of the substituted indenyl include 2-phenylindenyl, 2-methylindenyl, and the like. Incidentally, the two $Cp^R$s in the formula (XV) may be the same as or different from each other.

In the foregoing formulae (XV), each of $R^A$ and $R^B$ independently represents a hydrocarbon group having the carbon number of from 1 to 20, and $R^A$ and R are subjected to $\mu$-coordination to $M^1$ and Al, respectively. Here, examples of the hydrocarbon group having the carbon number of from 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, and the like. Incidentally, the $\mu$-coordination as referred to herein means a coordination mode taking a crosslinking structure.

In the foregoing formulae (XV), each of $R^C$ and $R^D$ independently represents a hydrocarbon group having the carbon number of from 1 to 20 or a hydrogen atom. Here, examples of the hydrocarbon group having the carbon number of from 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, and the like.

Incidentally, the above-described metallocene-based composite catalyst is, for example, obtained by allowing a metallocene complex represented by the following formula (XVI):

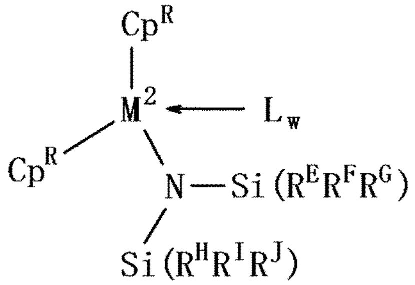

(XVI)

(wherein $M^2$ represents a lanthanoid element, scandium, or yttrium; each $Cp^R$ independently represents unsubstituted or substituted indenyl; each of $R^E$ to $R^J$ independently represents an alkyl group having the carbon number of from 1 to 3 or a hydrogen atom; L represents a neutral Lewis base; and w represents an integer of from 0 to 3) to react with an organoaluminum compound represented by $AlR^KR^LR^M$ in a solvent.

Incidentally, since the reaction temperature may be approximately room temperature, the metallocene-based composite catalyst can be manufactured under moderate conditions. In addition, though the reaction time is arbitrary, it is from about several hours to several ten hours. Though the reaction solvent is not particularly limited, it is preferably

a solvent capable of dissolving the raw materials and product therein, and for example, toluene or hexane may be used. Incidentally, it is preferable to determine the structure of the metallocene-based composite catalyst by means of $^1$H-NMR or X-ray structural analysis.

In the metallocene complex represented by the foregoing formula (XVI), $Cp^R$ represents unsubstituted indenyl or substituted indenyl and is synonymous with $Cp^R$ in the foregoing formula (XV). In addition, in the foregoing formula (XVI), the metal $M^2$ is a lanthanoid element, scandium, or yttrium and is synonymous with $M^1$ in the foregoing formula (XV).

The metallocene complex represented by the foregoing formula (XVI) contains a silylamide ligand $[-N(SiR_3)_2]$. Each of the R groups ($R^E$ to $R^J$ groups) contained in the silylamide ligand is independently an alkyl group having the carbon number of from 1 to 3 or a hydrogen atom. In addition, it is preferable that at least one of $R^E$ to $R^J$ is a hydrogen atom. When at least one of $R^E$ to $R^J$ is a hydrogen atom, the synthesis of a catalyst becomes easy. Furthermore, the alkyl group is preferably a methyl group.

The metallocene complex represented by the foregoing formula (XVI) further contains the neutral Lewis bases L in the number of from 0 to 3, and preferably from 0 to 1. Here, examples of the neutral Lewis base L include tetrahydrofuran, diethyl ether, dimethylaniline, trimethylphosphine, lithium chloride, a neutral olefin, a neutral diolefin, and the like. Here, in the case where the above-described complex contains a plurality of the neutral Lewis bases L, the neutral Lewis bases L may be the same as or different from each other.

In addition, the metallocene complex represented by the foregoing formula (XVI) may be present as a monomer, or may be present as a dimer or a multimer.

On the other hand, the organoaluminum compound which is used for the production of the above-described metallocene-based composite catalyst is represented by $AlR^KR^LR^M$. Here, each of $R^K$ and $R^L$ independently represents a monovalent hydrocarbon group having the carbon number of from 1 to 20 or a hydrogen atom, and $R^M$ represents a monovalent hydrocarbon group having the carbon number of from 1 to 20, provided that $R^M$ may be the same as or different from $R^K$ or $R^L$. Examples of the monovalent hydrocarbon group having the carbon number of from 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, a stearyl group, and the like.

Specifically, examples of the organoaluminum compound include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride; ethylaluminum dihydride, n-propylaluminum dihydride, isobutylaluminum dihydride, and the like. Of these, triethylaluminum, triisobutylaluminum, diethylaluminum hydride, and diisobutylaluminum hydride are preferable. In addition, these organoaluminum compounds can be used solely, or can also be used in admixture of two or more kinds thereof. Incidentally, the amount of the organoaluminum compound which is used for the production of the metallocene-based composite catalyst is preferably from 1 to 50 times by mole, and more preferably about 10 times by mole relative to the metallocene complex.

• Third polymerization catalyst composition

Next, the third polymerization catalyst composition which is used for the manufacturing method of the copolymer of a conjugated diene compound and a non-conjugated olefin according to the present invention is described.

The third polymerization catalyst composition contains the above-described metallocene-based composite catalyst and a boron anion. It is preferable that the third polymerization catalyst composition further contains other component which is contained in a usual polymerization catalyst composition containing a metallocene-based catalyst, for example, a promoter, etc. Incidentally, a combination of the metallocene-based composite catalyst and the boron anion is also referred to as a "two-component catalyst". According to the third polymerization catalyst composition, similar to the above-described metallocene-based composite catalyst, since it further contains the boron anion, it becomes possible to arbitrarily control the content of each of the monomer components in the copolymer.

Specifically, in the third polymerization catalyst composition, as the boron anion constituting the two-component catalyst, there is exemplified a tetravalent boron anion. Examples thereof include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl)borate, [tris(pentafluorophenyl), phenyl]borate, tridecahydride-7,8-dicarbaundecaborate, and the like. Of these, tetrakis(pentafluorophenyl)borate is preferable.

Incidentally, the boron anion can be used as an ionic compound combined with a cation. Examples of the cation include a carbonium cation, an oxonium cation, an amine cation, a phosphonium cation, a cycloheptatrienyl cation, a transition metal-containing ferrocenium cation, and the like. Examples of the carbonium cation include trisubstituted carbonium cations such as a triphenylcarbonium cation, a tri (substituted phenyl)carbonium cation, etc. Specifically,

examples of the tri(substituted phenyl)carbonium cation include a tri(methylphenyl)carbonium cation and the like. Examples of the amine cation include trialkylammonium cations such as a trimethylammonium cation, a triethylammonium cation, a tripropylammonium cation, a tributylammonium cation, etc.; N,N-dialkylanilinium cations such as an N,N-dimethylanilinium cation, an N,N-diethylanilinium cation, an N,N-2,4,6-pentamethylanilinium cation, etc.; dialkylammonium cations such as a diisopropylammonium cation, a dicyclohexylammonium cation, etc.; and the like. Examples of the phosphonium cation include triarylphosphonium cations such as a triphenylphosphonium cation, a tri(methylphenyl)phosphonium cation, a tri(dimethylphenyl)phosphonium cation, etc.; and the like. Of these cations, an N,N-dialkylanilinium cation or a carbonium cation is preferable, and an N,N-dialkylanilinium cation is especially preferable. In consequence, the ionic compound is preferably N,N-dimethylanilinium tetrakis(pentafluorophenyl)borate, triphenylcarbonium tetrakis(pentafluorophenyl)borate, or the like. Incidentally, the ionic compound composed of a boron anion and a cation is added in an amount of preferably from 0.1 to 10 times by mole, and more preferably about 1 time by mole relative to the metallocene-based composite catalyst.

Incidentally, in the third polymerization catalyst composition, it is necessary to use the above-described metallocene-based composite catalyst and the above-described boron anion. However, when the boron anion is present in the reaction system of allowing the metallocene catalyst represented by the foregoing formula (XVI) and the organoaluminum compound to react with each other, the metallocene-based composite catalyst of the foregoing formula (XV) cannot be synthesized. In consequence, in preparing the third polymerization catalyst composition, it is necessary to synthesize the metallocene-based composite catalyst in advance and, after isolating and purifying the metallocene-based composite catalyst, combine it with the boron anion.

As the promoter which can be used for the third polymerization catalyst composition, for example, in addition to the above-described organoaluminum compound represented by $AlR^KR^LR^M$, there are suitably exemplified an aluminoxane and the like. As the aluminoxane, an alkylaluminoxane is preferable, and examples thereof include methylaluminoxane (MAO), a modified methylaluminoxane, and the like. In addition, as the modified methylaluminoxane, MMAO-3A (available from Tosoh Finechem Corporation) and the like are preferable. Incidentally, these aluminoxanes may be used solely, or may also be used in combination of two or more kinds thereof.

<Other components>

• Filler

The resin composition according to the present invention may contain a filler. As the filler, those which are generally used can be used without particular limitations as the need arises.

Specifically, examples of an inorganic filler include silicates such as finely divided talc, kaolinite, calcined clay, pyrophyllite, sericite, wollastonite, etc.; carbonates such as precipitated calcium carbonate, magnesium carbonate, etc.; hydroxides such as aluminum hydroxide, magnesium hydroxide, etc.; oxides such as zinc oxide, magnesium oxide, etc.; powdery fillers of synthetic silicic acid or silicates, such as hydrous calcium silicate, hydrous aluminum silicate, hydrous silicic acid, silicic acid anhydride, etc.; flake fillers such as mica, etc.; fibrous fillers such as basic magnesium sulfate whiskers, calcium titanate whiskers, aluminum borate whiskers, sepiolite, PMF (processed mineral fiber), xonotlite, potassium titanate, ellestadite, etc.; balloon fillers such as glass balloon, fly ash balloon, etc.; and the like.

• Rubber component

The resin composition according to the present invention may be compounded with other rubber component or other resin component. Other rubber component is not particularly limited and can be properly selected depending upon the purpose. Examples thereof include a copolymer of other conjugated diene compound and a non-conjugated olefin, natural rubbers, various butadiene rubbers, various styrene-butadiene copolymer rubbers, isoprene rubbers, butyl rubbers, bromides of a copolymer of isobutylene and p-methylstyrene, halogenated butyl rubbers, acrylonitrile butadiene rubbers, chloroprene rubbers, ethylene-propylene copolymer rubbers, ethylene-propylene-diene copolymer rubbers, styrene-isoprene copolymer rubbers, styrene-isoprene-butadiene copolymer rubbers, isoprene-butadiene copolymer rubbers, chlorosulfonated polyethylene, acrylic rubbers, epichlorohydrin rubbers, polysulfide rubbers, silicone rubbers, fluorine rubbers, urethane rubbers, and the like. These may be used solely, or may also be used in combination of two or more kinds thereof.

• Additives

In addition, the resin composition of the present invention may contain additives such as a softening agent, a nucleating agent, an antioxidant, an anti-aging agent, a hydrochloric acid absorber, a heat-resistant stabilizer, a light stabilizer, an ultraviolet ray absorber, a lubricant, an antistatic agent, a flame retarder, a pigment, a dye, a dispersant,

a copper inhibitor, a neutralizing agent, a blowing agent, a plasticizer, an anti-foaming agent, a crosslinking agent, a crosslinking aid, a crosslinking accelerator, a flowability improving agent such as peroxides, etc., a weld strength improving agent, a plasticizer, a processing aid, a weathering stabilizer, a coloration inhibitor, a blooming inhibitor, etc.

The crosslinking agent is not particularly limited and can be properly selected depending upon the purpose. Examples thereof include a sulfur-based crosslinking agent, an organic peroxide-based crosslinking agent, an inorganic crosslinking agent, a polyamine crosslinking agent, a resin crosslinking agent, a sulfur compound-based crosslinking agent, an oxime-nitrosamine-based crosslinking agent, sulfur, and the like. Above all, a sulfur-based crosslinking agent is more preferable for rubber compositions for tire.

• Vulcanization accelerator

As other components, there is exemplified a vulcanization accelerator. As the vulcanization accelerator, there can be used guanidine-based, aldehyde-amine-based, aldehyde-ammonia-based, thiazole-based, sulfenamide-based, thiourea-based, thiuram-based, dithiocarbamate-based, and xanthate-based compounds. In addition, if desired, known materials such as a reinforcing agent, a softening agent, a filler, a vulcanization aid, a coloring agent, a flame retarder, a lubricant, a blowing agent, a plasticizer, a processing aid, an antioxidant, an anti-aging agent, a scorch inhibitor, an ultraviolet ray inhibitor, an antistatic agent, a coloration inhibitor, other compounding agents, etc. can be used depending upon the use purpose thereof.

<Member for automobile>

A molding method which has been conventionally applied to resin compositions can be applied to the resin composition of the present invention without particular limitations. As the molding method, known molding methods such as injection molding, extrusion molding, vacuum or pressure molding, etc. can be adopted.

Since the resin composition of the present invention is excellent in terms of impact resistance, low temperature properties, and the like, it can be suitably used for the manufacture of molded articles in various fields. In particular, the resin composition of the present invention can be suitably used for members for automobile such as automobile exterior materials or interior materials, etc. and is especially suitable for plate-shaped molded articles such as fenders, bumpers, etc.

Specifically, examples of automobile parts include an instrument panel, a center cluster, a meter cluster, a glove compartment, an airbag, a defroster garnish, an air duct, a heater control, a steering column cover, a knee bolster, an air defroster, a door trim, a sun shade, a rear parcel shelf, a pillar cover, a pillar impact absorber, a bonnet air scope, a radiator grille, head lamp parts, signal lamp parts, fog lamp parts, a bumper, a head lamp finisher, a license plate finisher, a fender, a door handle, a door miller, a door panel, a rear quarter panel, rear combination lamp parts, a tail gate panel, a luggage room trim, a wheel cover, a side rear cover, a center cap, a spoiler, a rear finisher, and the like.

<Electrical parts>

In addition, since the resin composition of the present invention is excellent in terms of impact resistance, low temperature properties, and the like, it is especially suitable for electrical parts such as household appliances, OA appliances, electrical and electronic parts, etc.

Examples of the electrical parts include a television housing, a television chassis, a deflection yoke, other television parts, an AC adaptor, a power pack, parts for an air conditioner, audio parts, a lighting cover, a monitor housing, a monitor chassis, a notebook PC housing, a notebook PC battery, a liquid crystal projector housing, a PDA housing, an antenna sheath, a printer housing, a printer chassis, a toner cartridge, an ink tank, a paper feed tray, a scanner housing, a scanner frame, a mobile phone housing, a mobile phone battery, and the like.

[Embodiment 2]

<Manufacturing method of resin composition>

The present invention is hereunder described in detail. The manufacturing method of the resin composition according to the present invention is concerned with a method for manufacturing a resin composition containing an olefin-based resin and a copolymer of a conjugated diene compound and a non-conjugated olefin, which comprises crosslinking a conjugated diene compound segment of the copolymer by dynamic crosslinking.

Incidentally, the dynamic crosslinking as referred to in the present invention means the matter that by kneading the raw materials constituting the resin composition in a molten state or irradiating the raw materials in a molten state with electron beams, or other means, at least the carbon-carbon double bond which the copolymer of a conjugated diene

compound and a non-conjugated olefin has is subjected to a crosslinking reaction.

On the occasion of subjecting the olefin-based resin and the copolymer of a conjugated diene compound and a non-conjugated olefin to dynamic crosslinking, though any of a non-open type apparatus and an open type apparatus may be used, it is preferable to use a non-open type apparatus.

In addition, it is preferable to conduct the dynamic crosslinking under an atmosphere of an inert gas such as nitrogen, a carbonic acid gas, etc. A temperature at which the dynamic crosslinking is conducted is generally from 150 to 270°C, and preferably from 170 to 250°C. A kneading time is generally from 1 to 20 minutes, and preferably from 1 to 10 minutes. In addition, a shear force to be applied is preferably in the range of from 10 to 50,000 $sec^{-1}$, and more preferably in the range of from 100 to 20,000 $sec^{-1}$ in terms of a shear rate.

As the kneading apparatus, a mixing roll, an intensive mixer (for example, a Banbury mixer or a kneader), a single-screw or twin-screw extruder, and the like can be used. However, a non-open type apparatus is preferable, and a twin-screw extruder is especially preferable.

In the case of conducting the crosslinking upon irradiation of electron beams, or the like, the crosslinking may also be conducted by melt kneading the olefin-based resin and the copolymer using an extruder and pelletizing the mixture, followed by irradiation with electron beams, or the like.

For the dynamic crosslinking, in addition to the irradiation with electron beams, a method of adding a crosslinking agent and heating the mixture can also be exemplified. In the present invention, though the crosslinking agent to be added to the kneaded material as the need arises is not particularly limited, for example, a peroxide or resin vulcanizing agent capable of undergoing the dynamic crosslinking by means of a radical reaction, or the like can be used.

The peroxide is not particularly limited, and examples thereof include di-t-butyl peroxide, dicumyl peroxide, t-butylcumyl peroxide, α,α-bis(t-butylperoxy)diisopropylbenzene, t-butylperoxybenzoate, 2,5-dimethyl-2,5-di(t-butylperoxy)hexane, 1,1-di(t-butylperoxy)-3,3,5-trimethylcyclohexane, n-butyl-4,4-bis(t-butylperoxy)valerate, benzoyl peroxide, p-methylbenzoyl peroxide, lauroyl peroxide, dilauroyl peroxide, and 2,5-dimethyl-2,5-di(t-butylperoxy)hexene-3; and general diaryl peroxides, ketone peroxides, peroxy dicarbonates, peroxy esters, dialkyl peroxides, hydroperoxides, and peroxy ketals.

In general, the use amount of the peroxide is preferably in the range of from 0.01 to 10 parts by mass based on 100 parts by mass of the olefin-based resin and the copolymer of a conjugated diene compound and a non-conjugated olefin. By allowing the use amount of the peroxide to fall within this range, a sufficient crosslinked state can be obtained without causing disadvantages from the standpoint of costs.

In addition, other components such as sulfur, a vulcanization accelerator, etc. may be compounded in addition to the crosslinking agent.

In the manufacturing method of the present invention, by conducting the dynamic crosslinking, an average particle diameter of dispersed particles of the conjugated diene compound segment in the copolymer of a conjugated diene compound and a non-conjugated olefin can be made to fall within a desired range, and the dispersed state of the conjugated diene compound segment in the resin composition can be made uniform.

The content of the copolymer of a conjugated diene compound and a non-conjugated olefin is regulated to be from 5 to 80 parts by mass based on 100 parts by mass of the olefin-based resin. In addition to the crosslinking of the conjugated diene compound segment by means of the dynamic crosslinking, the resin composition becomes homogenous, and the impact resistance of the resin composition is more increased.

<Olefin-based resin>

Next, the olefin-based resin contained in the resin composition which is used in the present invention is described. As the olefin-based resin, the same α-olefins as those exemplified in Embodiment 1 can be used solely or in combination of two or more kinds thereof.

In addition, among the above-described (co) polymers (1) to (9), as the olefin-based resin which is especially preferably used in the present invention, there can be exemplified (3) a propylene homopolymer, (4) a random copolymer of propylene and not more than 10 % by mole of other α-olefin, and (5) a block copolymer of propylene and not more than 30 % by mole of other α-olefin.

<Copolymer of conjugated diene compound and non-conjugated olefin>

• Constitution of copolymer of conjugated diene compound and non-conjugated olefin

The copolymer of a conjugated diene compound and a non-conjugated olefin as exemplified in the above-described Embodiment 1 can also be used in Embodiment 2.

The cis-1,4-bond content of the conjugated diene compound-derived segment (conjugated diene segment) of the copolymer of a conjugated diene compound and a non-conjugated olefin which is used in the present invention is

preferably 50 % or more, and more preferably 70 % or more.

When the cis-1,4-bond content of the conjugated diene compound segment of the copolymer of a conjugated diene compound and a non-conjugated olefin is 50 % or more, the brittleness at low temperatures is improved, so that the durability at low temperatures (low temperature properties) of the resin composition can be more enhanced.

Furthermore, the cis-1,4-bond content of the conjugated diene compound-derived segment (conjugated diene segment) is preferably more than 92 %, and more preferably 95 % or more.

By regulating the cis-1, 4-bond content of the conjugated diene compound-derived segment (conjugated diene segment) to more than 92 %, it becomes possible to enhance the crack growth resistance, weather resistance, and heat resistance. In addition, by regulating the cis-1,4-bond content of the conjugated diene compound-derived segment (conjugated diene segment) to 95 % or more, the crack growth resistance, weather resistance, and heat resistance can be much more increased.

<Other components>

The resin composition according to Embodiment 2 may contain, as other components, a filler, a rubber component, a resin component, an additive, and a granulation accelerator as exemplified in Embodiment 1.

<Member for automobile>

A molding method which has been conventionally applied to resin compositions can be applied to the resin composition of Embodiment 2 without particular limitations. As the molding method, known molding methods such as injection molding, extrusion molding, vacuum or pressure molding, etc. can be adopted.

Since the resin composition of Embodiment 2 is excellent in terms of impact resistance, low temperature properties, and the like, it can be suitably used for the manufacture of molded articles in various fields. In particular, the resin composition of the present invention can be suitably used for members for automobile such as automobile exterior materials or interior materials, etc. and is especially suitable for plate-shaped molded articles such as fenders, bumpers, etc.

More specifically, examples of automobile parts include an instrument panel, a center cluster, a meter cluster, a glove compartment, an airbag, a defroster garnish, an air duct, a heater control, a steering column cover, a knee bolster, an air defroster, a door trim, a sun shade, a rear parcel shelf, a pillar cover, a pillar impact absorber, a bonnet air scope, a radiator grille, head lamp parts, signal lamp parts, fog lamp parts, a bumper, a head lamp finisher, a license plate finisher, a fender, a door handle, a door miller, a door panel, a rear quarter panel, rear combination lamp parts, a tail gate panel, a luggage room trim, a wheel cover, a side rear cover, a center cap, a spoiler, a rear finisher, and the like.

<Electrical parts>

In addition, since the resin composition of Embodiment 2 is excellent in terms of impact resistance, low temperature properties, and the like, it is especially suitable for electrical parts such as household appliances, OA appliances, electrical and electronic parts, etc.

Examples of the electrical parts include a television housing, a television chassis, a deflection yoke, other television parts, an AC adaptor, a power pack, parts for an air conditioner, audio parts, a lighting cover, a monitor housing, a monitor chassis, a notebook PC housing, a notebook PC battery, a liquid crystal projector housing, a PDA housing, an antenna sheath, a printer housing, a printer chassis, a toner cartridge, an ink tank, a paper feed tray, a scanner housing, a scanner frame, a mobile phone housing, a mobile phone battery, and the like.

## EXAMPLES

The present invention is hereunder described in more detail by reference to the following Examples, it should be construed that the present invention is not limited to the following Examples at all. An analysis method of an ethylene-butadiene copolymer (EBR) and an evaluation method of a resin composition are described below.

[Evaluation method]

<Impact resistance>

The measurement was conducted using a Charpy impact tester at ordinary temperature (25°C) in conformity with JIS K7111:1996. The impact resistance was expressed with an index while defining a value of Comparative Example 2 as described later as 100. The larger the numerical value, the more favorable the impact resistance is.

Impact resistance index = {(Impact value of test sample)/(Impact value of sample of Comparative Example 1)} × 100

<Low temperature properties>

The low temperature properties were measured using a Charpy impact tester at -20°C in conformity with JIS K7111:1996. The case where breakage did not occur is expressed as "good", whereas the case where breakage occurred is expressed "poor".

[Examples and Comparative Examples]

<Manufacture of copolymer of conjugated diene compound and non-conjugated olefin>

• Manufacturing Example 1: Manufacture of Copolymer A (multi-block copolymer)

In a thoroughly dried 2-liter stainless steel reactor, 150 mL of toluene was added, and ethylene was then introduced at 0.8 MPa. On the other hand, in a glove box under a nitrogen atmosphere, 14.5 μmoles of bis(2-phenylindenyl)gadolinium bis (dimethylsilylamide) $[(2\text{-}PhC_9H_6)_2GdN(SiHMe_2)_2]$, 14.1 μmoles of triphenylcarbonium tetrakis(pentafluorophenyl)borate $(Ph_3CB(C_6F_5)_4)$, and 0.87 mmoles of diisobutylaluminum hydride were charged in a glass-made container, and the mixture was dissolved in 5 mL of toluene to prepare a catalyst solution. Thereafter, the catalyst solution was taken out from the glove box and added in an amount of 14.1 μmoles as reduced into gadolinium to the monomer solution, thereby conducting polymerization at 50°C for 5 minutes. Thereafter, 20 mL of a toluene solution containing 3.05 g (0.056 moles) of 1,3-butadiene was added while lowering the introduction pressure of ethylene at a rate of 0.2 MPa/min, and thereafter, the polymerization was further conducted for 15 minutes. Subsequently, the operation of "returning the introduction pressure of ethylene to 0.8 MPa, conducting the polymerization for 5 minutes, then adding 40 mL of a toluene solution containing 6.09 g (0.113 moles) of 1,3-butadiene while lowering the introduction pressure of ethylene at a rate of 0.2 MPa/min, and then conducting the polymerization for an additional 30 minutes" was repeated three times in total. After completion of the polymerization, 1 mL of an isopropanol solution of 5 % by mass of 2,2'-methylene-bis(4-ethyl-6-t-butylphenol) (NS-5) was added to terminate the reaction. Furthermore, the copolymer was separated with a large amount of methanol and dried under vacuum at 70°C to obtain Polymer C (multi-block copolymer). A yield of the resulting Copolymer A was 24.50 g.

• Manufacturing Example 2: Manufacture of Copolymer B

In a thoroughly dried 400-mL pressure-resistant glass reactor, 160 mL of a toluene solution was added, and ethylene was then introduced at 0.8 MPa. On the other hand, in a glove box under a nitrogen atmosphere, 28.5 μmoles of bis(2-phenylindenyl)gadolinium bis(dimethylsilylamide) $[(2\text{-}PhC_9H_6)_2GdN(SiHMe_2)_2]$, 34.2 μmoles of dimethylanilinium tetrakis (pentafluorophenyl) borate $[Me_2NHPhB(C_6F_5)_4]$, and 1.43 mmoles of diisobutylaluminum hydride were charged in a glass-made container, and the mixture was dissolved in 8 mL of toluene to prepare a catalyst solution. Thereafter, the catalyst solution was taken out from the glove box and added in an amount of 28.2 μmoles as reduced into gadolinium to the monomer solution, thereby conducting polymerization at room temperature for 5 minutes. Thereafter, 100 mL of a toluene solution containing 15.23 g (0.28 moles) of 1,3-butadiene was added while lowering the introduction pressure of ethylene at a rate of 0.2 MPa/min, and thereafter, the polymerization was further conducted for 90 minutes. After completion of the polymerization, 1 mL of an isopropanol solution of 5 % by mass of 2,2'-methylene-bis(4-ethyl-6-t-butylphenol) (NS-5) was added to terminate the reaction. Furthermore, the copolymer was separated with a large amount of methanol and dried under vacuum at 70°C to obtain Copolymer B (block copolymer). A yield of the resulting Copolymer B was 12.50 g.

• Manufacturing Example 3: Manufacture of Copolymer C

In a thoroughly dried 400-mL pressure-resistant glass reactor, 100 mL of a toluene solution was added, and ethylene was then introduced at 0.8 MPa. On the other hand, in a glove box under a nitrogen atmosphere, 28.5 μmoles of bis(2-phenylindenyl)gadolinium bis(dimethylsilylamide) $[(2\text{-}PhC_9H_6)_2GdN(SiHMe_2)_2]$, 34.2 μmoles of dimethylanilinium tetrakis (pentafluorophenyl) borate $[Me_2NHPhB(C_6F_5)_4]$, and 1.43 mmoles of diisobutylaluminum hydride were

charged in a glass-made container, and the mixture was dissolved in 8 mL of toluene to prepare a catalyst solution. Thereafter, the catalyst solution was taken out from the glove box and added in an amount of 28.2 μmoles as reduced into gadolinium to the monomer solution, thereby conducting polymerization at room temperature for 5 minutes. Thereafter, 30 mL of a toluene solution containing 4.57 g (0.085 moles) of 1, 3-butadiene was added while lowering the introduction pressure of ethylene at a rate of 0.2 MPa/min, and thereafter, the polymerization was further conducted for 60 minutes. Subsequently, the operation of "returning the introduction pressure of ethylene to 0.8 MPa, conducting the polymerization for 5 minutes, then adding 30 mL of a toluene solution containing 4.57 g (0.085 moles) of 1,3-butadiene while lowering the introduction pressure of ethylene at a rate of 0.2 MPa/min, and then further conducting the polymerization for 60 minutes" was repeated three times in total. After completion of the polymerization, 1 mL of an isopropanol solution of 5 % by mass of 2,2'-methylene-bis(4-ethyl-6-t-butylphenol) (NS-5) was added to terminate the reaction. Furthermore, the copolymer was separated with a large amount of methanol and dried under vacuum at 70°C to obtain Copolymer C (multi-block copolymer). A yield of the resulting Copolymer C was 14.00 g.

• Manufacturing Example 4: Manufacture of Copolymer D

The experiment was conducted in the same method as that in Manufacturing Example 3, except for using bis(2-phenyl-1-methylindenyl)gadolinium bis (dimethylsilylamide) [(2-Ph-1-Me$C_9H_5$)$_2$GdN($SiHMe_2$)$_2$] instead of using bis(2-phenylindenyl)gadolinium bis (dimethylsilylamide) [(2-Ph$C_9H_6$)$_2$GdN($SiHMe_2$)$_2$], thereby obtaining Copolymer D (multi-block copolymer). A yield of the resulting Copolymer D was 28.55 g.

<Analysis method of copolymer of conjugated diene compound and non-conjugated olefin>

A microstructure, an ethylene content, a weight average molecular weight (Mw), a molecular weight distribution (Mw/Mn), and a DSC curve of each of Copolymers A to G as manufactured or obtained above were evaluated in the following methods. Incidentally, FIG. 1 is a $^{13}$C-NMR spectral chart of Copolymer B; FIG. 2 shows a DSC curve of Copolymer B; and FIG. 3 shows a DSC curve of Copolymer A. Incidentally, the ordinate of the DSC curve shows a heat flow rate.

(1) Microstructure (1,2-vinyl bond amount (Vi (%)) and cis-1,4-bond content)

A microstructure (1,2-vinyl bond amount) of the butadiene segment in the copolymer was determined from an integral ratio of the 1,2-vinyl bond component (at 5.0 to 5.1 ppm) and the butadiene bond component (at 5 to 5.6 ppm) of the whole by a $^1$H-NMR spectrum (at 100°C, d-tetrachloroethane standard: 6 ppm), and a microstructure (cis-1,4-bond content) of the butadiene segment in the copolymer was determined from an integral ratio of the cis-1,4-bond component (at 26.5 to 27.5 ppm) and the butadiene bond component (at 26.5 to 27.5 ppm + 31.5 to 32.5 ppm) of the whole by a $^{13}$C-NMR spectrum (at 100°C, d-tetrachloroethane standard: 73.8 ppm). Calculated values of the 1,2-vinyl bond amount (Vi (%)) and the cis-1,4-bond content (%) are shown in Table 1.

(2) Content of ethylene

The content (% by mole) of the ethylene segment in the copolymer was determined from an integral ratio of the ethylene bond component (at 28.5 to 30.0 ppm) and the butadiene bond component (at 26.5 to 27.5 ppm + 31.5 to 32.5 ppm) of the whole by a $^{13}$C-NMR spectrum (at 100°C, d-tetrachloroethane standard: 73.8 ppm). The content (% by mole) of the ethylene segment is shown in Table 1.

(3) Weight average molecular weight (Mw) and molecular weight distribution (Mw/Mn)

A weight average molecular weight (Mw) and molecular weight distribution (Mw/Mn) of the polymer as reduced into polystyrene were determined on the basis of monodispersed polystyrene by means of gel permeation chromatography [GPC: HLC-8121GPC/HT, available from Tosoh Corporation; column: $GMH_{HR}$-H(S)HT × 2, available from Tosoh Corporation; detector: differential refractometer (RI)]. Incidentally, the measurement temperature is 140°C.

(4) DSC curve

The differential scanning calorimetry (DSC) was conducted in conformity with JIS K7121-1987, a DSC curve was drawn, and a melting point of block polyethylene (DSC peak temperature) was measured. Incidentally, in the measurement, in order to avoid any influences of impurities such as a single polymer, a catalyst residue, etc., the copolymer was dipped in a large amount of tetrahydrofuran for 48 hours, all of the components dissolved in tetrahydrofuran

were removed, and then, the dried rubber component was used as a sample.

[Table 1]

| | Manufacturing Example 1 | Manufacturing Example 2 | Manufacturing Example 3 | Manufacturing Example 4 |
|---|---|---|---|---|
| Type of copolymer | A | B | C | D |
| Mw ($\times 10^3$) | 205 | 350 | 283 | 221 |
| Mw/Mn | 9.15 | 2.2 | 2.8 | 3.13 |
| Vinyl bond amount Vi of butadiene segment (%) | 1.4 | 1.2 | 1.2 | 1.8 |
| Cis-1,4-bond content of butadiene segment (%) | 97 | 98 | 97 | 97 |
| Ethylene content (% by mole) | 34 | 7 | 13 | 45 |
| Melting point of block polyethylene (DSC peak temperature) | 121 | 121 | 121 | 122 |

In the $^{13}$C-NMR spectral chart of Copolymer B shown in FIG. 1, a peak derived from the ethylene block segment is seen at 29.4 ppm; and in the DSC curves of Copolymers B and A shown in FIGs. 2 and 3, a crystallization temperature derived from the block segment composed of the monomer cis unit of 1,3-butadiene can be observed in the vicinity of -10°C, and a crystallization temperature derived from the block segment composed of the monomer unit of ethylene can be observed in the vicinity of 120°C by DSC.

It is noted from the foregoing that Copolymers A and B are a block copolymer of 1, 3-butadiene and ethylene with high cis.

In addition, with respect to Copolymer B, the sequence distribution was analyzed by applying the ozone decomposition-GPC method of the literature (Polymer Preprints, Japan, Vol. 42, No. 4, page 1347). Incidentally, the measurement was conducted by means of gel permeation chromatography [GPC: HLC-8121GPC/HT, available from Tosoh Corporation; column: GPCHT-803 $\times$ 2, available from Showa Denko K.K.; detector: differential refractometer (RI); on the basis of monodispersed polystyrene; measurement temperature: 140°C]. As a result, the proportion of the block ethylene segment, namely the polyethylene component having a number average molecular weight (Mn) of 1,000 or more, relative to the whole of the ethylene component was 80 % by mass or more, and thus, Copolymer B was confirmed to be a block copolymer.

In addition, it is also possible to make the decision by the fact that a peak area of 80°C or higher exhibiting the amount of the block polyethylene component accounts for 80 % or more relative to the whole of the heat absorption peak area at a temperature of from 40 to 140°C. If the random properties are high, the excellent performances of the present invention are not obtained.

Similarly, Copolymers C, A, D and E were confirmed to be a block copolymer of 1,3-butadiene and ethylene by the $^{13}$C-NMR, DSC, and ozone decomposition-high temperature GPC method and also confirmed to be a random copolymer in view of the fact that a polyethylene component having a number average molecular weight (Mn) of 1,000 or more by the ozone decomposition-high temperature GPC method did not substantially exist.

[Evaluation results]

With respect to resin compositions of Examples 1 to 10 and Comparative Examples 1 to 2, the impact resistance and low temperature properties were measured according to the above-described methods. As Comparative Example 1, a material composed of 100 parts by mass of a polyethylene resin was used, and as Comparative Example 2, a material composed of 100 parts by mass of a polypropylene resin was used. Results are shown in Tables 2, 3 and 4.

Examples marked with a "*" are included by way of reference.

[Table 2]

| | Example 1 | Example 2 | Example 3* | Example 4* | Example 5 |
|---|---|---|---|---|---|
| Compounding (parts by mass) | | | | | |

(continued)

| | | Example 1 | Example 2 | Example 3* | Example 4* | Example 5 |
|---|---|---|---|---|---|---|
| | Copolymer A | 10 | 10 | 0 | 0 | 0 |
| | Copolymer B | 0 | 0 | 10 | 0 | 0 |
| | Copolymer C | 0 | 0 | 0 | 10 | 0 |
| | Copolymer D | 0 | 0 | 0 | 0 | 10 |
| | PE *1 | 100 | 0 | 100 | 100 | 100 |
| | PP *2 | 0 | 100 | 0 | 0 | 0 |
| Evaluation results | | | | | | |
| | Impact resistance | 205 | 185 | 230 | 220 | 190 |
| | Low temperature properties | Good | Good | Good | Good | Good |

[Table 3]

| | | Example 6 | Example 7 | Example 8* | Example 9* | Example 10 |
|---|---|---|---|---|---|---|
| Compounding (parts by mass) | | | | | | |
| | Copolymer A | 20 | 20 | 0 | 0 | 0 |
| | Copolymer B | 0 | 0 | 20 | 0 | 0 |
| | Copolymer C | 0 | 0 | 0 | 20 | 0 |
| | Copolymer D | 0 | 0 | 0 | 0 | 20 |
| | PE *1 | 100 | 0 | 100 | 100 | 100 |
| | PP *2 | 0 | 100 | 0 | 0 | 0 |
| Evaluation results | | | | | | |
| | Impact resistance | 230 | 210 | 250 | 240 | 200 |
| | Low temperature properties | Good | Good | Good | Good | Good |

[Table 4]

| | | Comparative Example 1 | Comparative Example 2 |
|---|---|---|---|
| Compounding (parts by mass) | | | |
| | Copolymer A | 0 | 0 |
| | Copolymer B | 0 | 0 |
| | Copolymer C | 0 | 0 |
| | Copolymer D | 0 | 0 |
| | PE *1 | 100 | 0 |
| | PP *2 | 0 | 100 |
| Evaluation results | | | |
| | Impact resistance | 165 | 100 |
| | Low temperature properties | Good | Poor |

[Note]

*1: Polyethylene resin, a trade name: HI-ZEX(HDPE) 1608J, available from Prime Polymer Co., Ltd.
*2: Polypropylene resin, a trade name: Prime Polypro J229E, available from Prime Polymer Co., Ltd.

It was noted from the results of Tables 2 to 4 that the resin compositions compounded with Copolymers A to E, respectively are excellent in terms of both of low temperature properties and impact resistance.

## Claims

1. A resin composition containing an olefin-based resin and a copolymer of a conjugated diene compound and a non-conjugated olefin, wherein
the copolymer is a block copolymer, wherein in the copolymer, the proportion of the conjugated diene is from 30 % by mole to 80 % by mole, and
wherein the content of the copolymer is from 5 to 80 parts by mass based on 100 parts by mass of the olefin-based resin.

2. The resin composition according to claim 1, wherein a structure of the block copolymer is any one of $(A\text{-}B)_x$, A- $(B\text{-}A)_x$, and B- $(A\text{-}B)_x$ (wherein A is a block segment composed of a monomer unit of a conjugated diene compound; B is a block segment composed of a monomer unit of a non-conjugated olefin; and x is an integer of 1 or more).

3. The resin composition according to claim 1 or 2, which is a resin composition containing an olefin-based resin and a copolymer of a conjugated diene compound and a non-conjugated olefin, with the cis-1, 4-bond content of the conjugated diene compound segment of the copolymer being 50 % or more.

4. The resin composition according to any one of claims 1 to 3, wherein the weight average molecular weight as reduced into polystyrene of the copolymer is from 10, 000 to 10, 000, 000.

5. The resin composition according to any one of claims 1 to 4, wherein the molecular weight distribution (Mw/Mn) of the copolymer is not more than 10.

6. The resin composition according to any one of claims 1 to 5, wherein the non-conjugated olefin is an acyclic olefin.

7. The resin composition according to any one of claims 1 to 6, wherein the carbon number of the non-conjugated olefin is from 2 to 10.

8. The resin composition according to any one of claims 1 to 7, wherein the value of the solubility parameter of the olefin-based resin is from 7 to 9.

9. A member for automobile using the resin composition according to any one of claims 1 to 8.

10. An electrical part using the resin composition according to any one of claims 1 to 8.

11. A method for manufacturing the resin composition according to claim 1 containing an olefin-based resin and a copolymer of a conjugated diene compound and a non-conjugated olefin,
which comprises crosslinking the conjugated diene compound segment of the copolymer by dynamic crosslinking.

## Patentansprüche

1. Harzzusammensetzung, die ein Harz auf der Basis von Olefin und ein Copolymer einer konjugierten Dienverbindung und eines nichtkonjugierten Olefins enthält, wobei
das Copolymer ein Blockcopolymer ist, wobei in dem Copolymer der Anteil des konjugierten Diens 30 Mol-% bis 80 Mol-% beträgt und
wobei der Gehalt des Copolymers 5 bis 80 Masseteile, auf 100 Masseteile des Harzes auf der Basis von Olefin

bezogen, beträgt.

2. Harzzusammensetzung nach Anspruch 1, wobei eine Struktur des Blockcopolymers irgendeine von $(A-B)_x$, $A-(B-A)_x$ und $B-(A-B)_x$ ist (wobei A ein Blocksegment ist, das aus einer Monomereinheit einer konjugierten Dienverbindung besteht; B ein Blocksegment ist, das aus einer Monomereinheit eines nichtkonjugierten Olefins besteht; und x eine ganze Zahl von 1 oder mehr ist).

3. Harzzusammensetzung nach Anspruch 1 oder 2, die eine Harzzusammensetzung ist, die ein Harz auf der Basis von Olefin und ein Copolymer einer konjugierten Dienverbindung und eines nicht konjugierten Olefins enthält, wobei der eis-1,4-Bindungsgehalt des konjugierten Dienverbindungssegments in dem Copolymer 50 % oder mehr beträgt.

4. Harzzusammensetzung nach irgendeinem der Ansprüche 1 bis 3, wobei das gewichtsdurchschnittliche Molekulargewicht, wie zu Polystyrol des Copolymers reduziert, 10 000 bis 10 000 000 beträgt.

5. Harzzusammensetzung nach irgendeinem der Ansprüche 1 bis 4, wobei die Molekulargewichtsverteilung (Mw/Mn) des Copolymers nicht mehr als 10 beträgt.

6. Harzzusammensetzung nach irgendeinem der Ansprüche 1 bis 5, wobei das nichtkonjugierte Olefin ein acyclisches Olefin ist.

7. Harzzusammensetzung nach irgendeinem der Ansprüche 1 bis 6, wobei die Kohlenstoffzahl des nichtkonjugierten Olefins 2 bis 10 beträgt.

8. Harzzusammensetzung nach irgendeinem der Ansprüche 1 bis 7, wobei der Wert des Löslichkeitsparameters des Harzes auf der Basis von Olefin 7 bis 9 beträgt.

9. Teil für ein Kraftfahrzeug, bei dem die Harzzusammensetzung nach irgendeinem der Ansprüche 1 bis 8 verwendet wird.

10. Elektrisches Teil, bei dem die Harzzusammensetzung nach irgendeinem der Ansprüche 1 bis 8 verwendet wird.

11. Verfahren für die Herstellung der Harzzusammensetzung nach Anspruch 1, die ein Harz auf der Basis von Olefin und ein Copolymer einer konjugierten Dienverbindung und eines nichtkonjugierten Olefins enthält,
das das Vernetzen des konjugierten Dienverbindungssegments des Copolymers durch dynamisches Vernetzen umfasst.

## Revendications

1. Composition de résine contenant une résine à base d'oléfine et un copolymère d'un composé diène conjugué et d'une oléfine non conjuguée,
le copolymère étant un copolymère séquencé, où dans le copolymère, la proportion du diène conjugué est de 30 % en moles à 80 % en moles, et
où la teneur du copolymère est de 5 à 80 parties en masse sur la base de 100 parties en masse de la résine à base d'oléfine.

2. Composition de résine selon la revendication 1, où une structure du copolymère séquencé est n'importe laquelle de $(A-B)_x$, $A-(B-A)_x$ et $B-(A-B)_x$ (où A est un segment séquencé composé d'un motif monomère d'un composé diène conjugué; B est un segment séquencé composé d'un motif monomère d'une oléfine non conjuguée; et x est un nombre entier d'une valeur de 1 ou plus).

3. Composition de résine selon la revendication 1 ou 2, qui est une composition de résine contenant une résine à base d'oléfine et un copolymère d'un composé diène conjugué et d'une oléfine non conjuguée, avec la teneur en liaisons cis-1,4 du segment composé diène conjugué du copolymère de 50 % ou plus.

4. Composition de résine selon l'une quelconque des revendications 1 à 3, où le poids moléculaire moyen en poids tel que ramené en polystyrène du copolymère est de 10 000 à 10 000 000.

**5.** Composition de résine selon l'une quelconque des revendications 1 à 4, où la distribution des poids moléculaires (Mw/Mn) du copolymère n'est pas supérieure à 10.

**6.** Composition de résine selon l'une quelconque des revendications 1 à 5, où l'oléfine non conjuguée est une oléfine acyclique.

**7.** Composition de résine selon l'une quelconque des revendications 1 à 6, où le nombre d'atomes de carbone de l'oléfine non conjuguée est de 2 à 10.

**8.** Composition de résine selon l'une quelconque des revendications 1 à 7, où la valeur du paramètre de solubilité de la résine à base d'oléfine est de 7 à 9.

**9.** Élément pour automobile utilisant la composition de résine selon l'une quelconque des revendications 1 à 8.

**10.** Pièce électrique utilisant la composition de résine selon l'une quelconque des revendications 1 à 8.

**11.** Procédé de fabrication de la composition de résine selon la revendication 1 contenant une résine à base d'oléfine et un copolymère d'un composé diène conjugué et d'une oléfine non conjuguée,
qui comprend la réticulation du segment composé diène conjugué du copolymère par réticulation dynamique.

[FIG. 1]

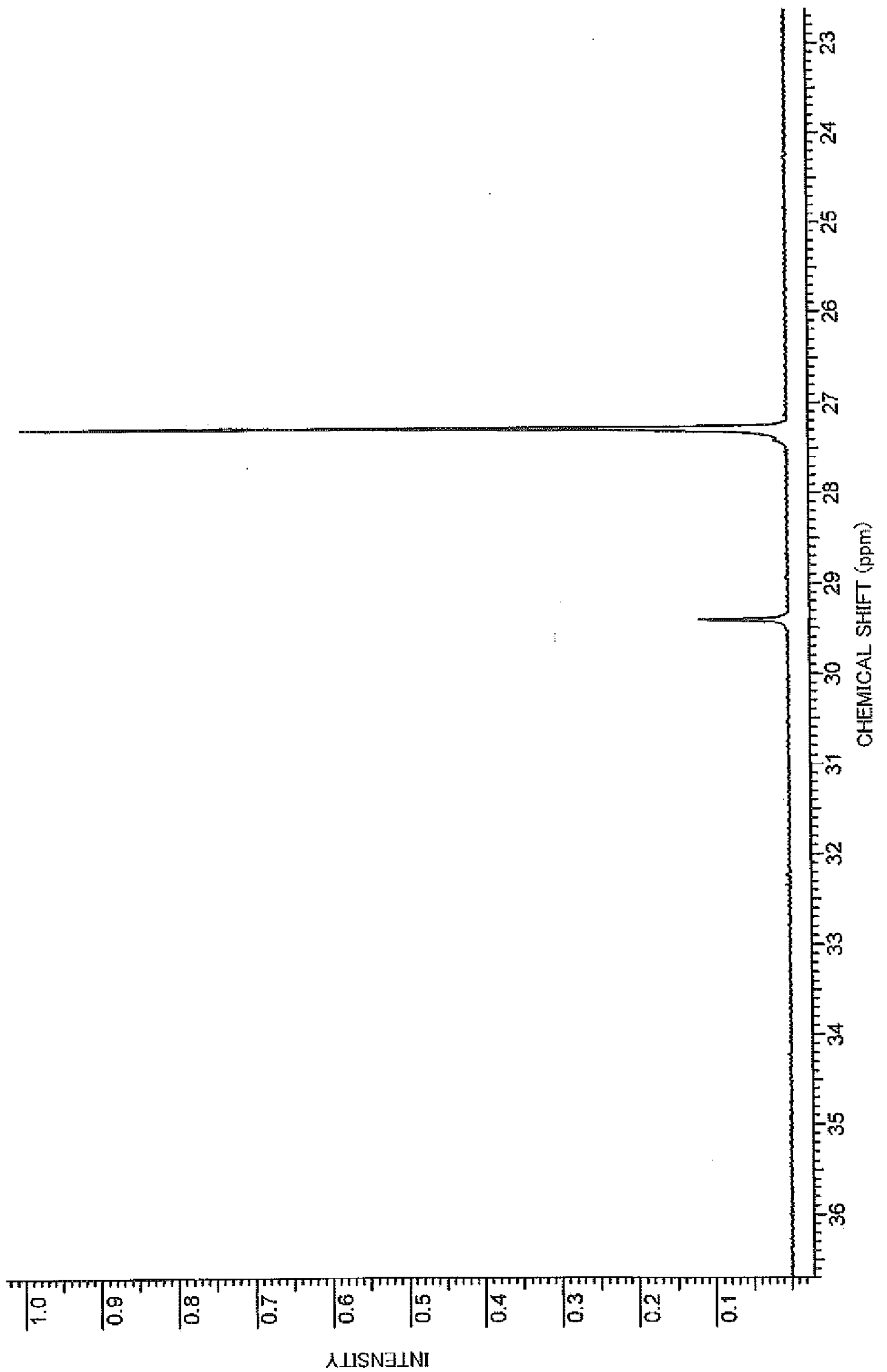
CHEMICAL SHIFT (ppm)
23
24
25
26
27
28
29
30
31
32
33
34
35
36
INTENSITY
1.0
0.9
0.8
0.7
0.6
0.5
0.4
0.3
0.2
0.1

[FIG. 2]

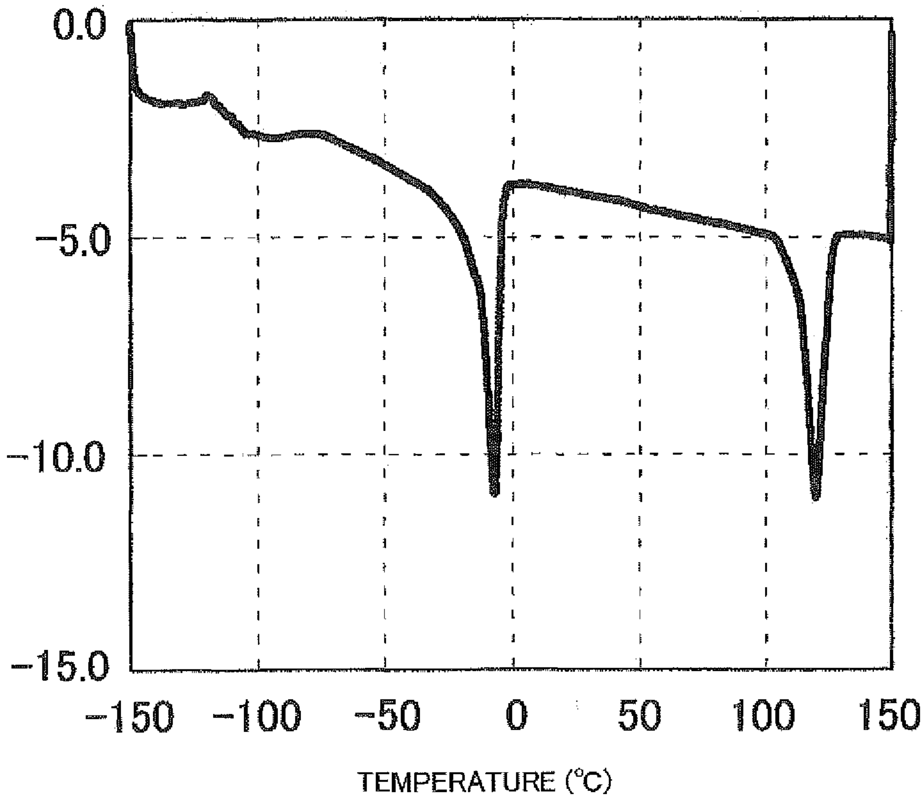

[FIG. 3]

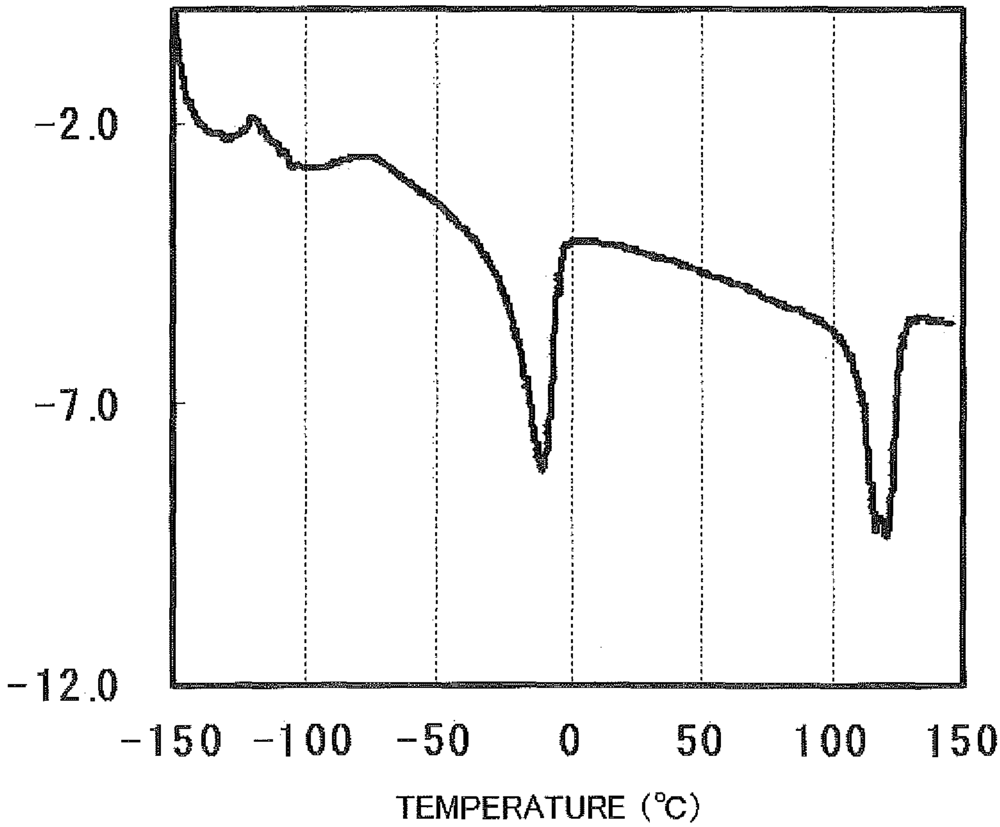

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0387947 A
- US 20040077815 A
- JP 5295193 A
- JP 7233301 A
- JP 7233302 A
- JP 7300540 A
- JP 6157836 A
- JP 8120129 A
- JP 2003020369 A
- WO 200181461 A


### Non-patent literature cited in the description


- *Polymer Preprints, Japan,* vol. 42 (4), 1347